**Europäisches Patentamt**

**European Patent Office**

**Office européen des brevets**

(11) Publication number : **0 648 820 A2**

(12) # EUROPEAN PATENT APPLICATION

(21) Application number : **94307224.9**

(22) Date of filing : **03.10.94**

(51) Int. Cl.⁶ : **C09D 9/00**

(30) Priority : **07.10.93 JP 251724/93**
**28.09.94 JP 233231/94**

(43) Date of publication of application :
**19.04.95 Bulletin 95/16**

(84) Designated Contracting States :
**CH DE FR GB IT LI**

(71) Applicant : **Qyentos Corporation**
**2 Meson Chigusa 3,**
**0-tori-nakamachi 1 chome**
**Sakai-shi, Osaka (JP)**

(72) Inventor : **Fukai, Hisayo**
**35-8, Nishisugamo 1-chome**
**Toshima-ku, Tokyo (JP)**

(74) Representative : **Hillier, Peter et al**
**Reginald W. Barker & Co.,**
**Chancery House,**
**53-64, Chancery Lane**
**London, WC2A 1QU (GB)**

(54) Chemical composition for removing organic adherent matters.

(57)    A chemical composition for removing organic adherent matters comprises water and an organic compound, such as dibasic carboxylic ester, capable of dissolving or wetting adherents attached to the surface of an adherend, and additionally comprises either or both of surface-active agent and an additive which is selected from a group of alcohols, glycol-ether and pyrrolidone derivatives. The organic compound is dispersed in the water in an oil-in-water type.

EP 0 648 820 A2

BACKGROUND OF THE INVENTION

The present invention relates to a chemical composition for removing organic adherent matters, which include synthetic resins such as toner, printing ink, and oil, from an adherend such as a metal, glass, plastic, concrete, or paper.

It is known to use an organic solvent or water-soluble detergent for removing organic adherent matters (referred to as "adherents" hereinafter) including resins, mineral oil, and lubricant, from a body of metal, glass, plastic, concrete, or paper material (referred to as an adherend hereinafter).

Such an organic solvent when used to remove adherents from an adherend however performs a dissolving action which causes a portion of the removed adherent to dissolve in the solvent. This results in declination of the power of dissolving of the solvent and if worse, the removed adherent will be attached back.

A water-soluble detergent can hardly remove resins. Otherwise, a resin if removed by the action of the detergent is dissolved in the water-soluble detergent which will in turn be degraded and lessened in the power of cleaning. It is thus said that the water-soluble detergent is applicable to a limited range of use.

Any conventional organic solvent or water-soluble detergent is capable of removing only a specific group of adherents and its removing power is too low to be practical.

For disposal of unwanted runner rollers made by coating steel cores with rubber layers and used bumpers made by protecting steel bodies with urethane resin coatings, the rubber layers and urethane coatings are mechanically separated or incinerated to recover steel materials. Such a process is however low in the workability and the incineration will produce amounts of toxic gas causing environmental disruption. When the rubber layers and urethane coatings are dissolved using a solvent, they can never be reclaimed.

Also, the cost of the solvent is not negligible.

We, the inventors, have proposed a couple of novel compositions for removing paint or varnish which replace the conventional solvent with a lower boiling point, as disclosed in Japanese Patent Laid-open Publications 63-317567(1988) and 2-267557(1990) respectively. It is now found that both the compositions were not final solutions for the purpose.

In particular, the former contains a thickening agent thus causing a removed adherent to be attached back to the adherend. The latter permits a part of the adherent to dissolve therein and will not be appropriate for reuse. The adherent can hardly be recovered in groups.

It is an object of the present invention, in view of the above aspects, to provide a composition capable of removing adherents which are hardly removed with a conventional solvent or detergent and having a high durability and a versatility for multiple applications so that adherents and adherends can be recovered separately.

SUMMARY OF THE INVENTION

For achievement of the foregoing object, a composition of the present invention defined in any of the appended claims 1 to 3 comprises water and an organic compound capable of dissolving or wetting adherents attached to the surface of an adherend, and the organic compound is dispersed in the water in an oil-in water type.

Also, a composition defined in any of the appended claims 4 to 7 comprises water, a surface-active agent, and an organic compound capable of dissolving or wetting adherents attached to the surface of an adherend, and the organic compound is dispersed in the water in an oil-in water type.

A composition defined in any of the appended claims 8 to 11 comprises water, at least an additive selected from alcohols, glycolether, and pyrrolidone derivatives, and an organic compound capable of dissolving or wetting adherents attached to the surface of an adherend, and the organic compound is dispersed in the water in an oil-in water type.

A composition defined in any of the appended claims 12 to 16 comprises water, a surface-active agent, at least an additive selected from alcohols, glycol-ether, and pyrrolidone derivatives, and an organic compound capable of dissolving or wetting adherents attached to the surface of an adherend, and the organic compound is dispersed in the water in an oil-in water type.

Throughout the appended claims 1 to 16, the oil-in water type dispersion includes a condition that a mixture of a phase where a portion of the organic compound is dissolved in the water and a phase of the organic compound is suspended in the water phase. Separated water and organic compound, which would be made into the oil-in-water type dispersion by agitation, would be also included in this type.

The organic adherents include a dispersion of nonorganic substance as well as organic substances.

There is no specific restriction on the blend ration between the above-exemplified organic compound and water. However, it is desired that 1 through 90% by weight of selected organic compound be contained in the fixing-agent solution against water. Preferably, the blend ratio shall remain in a range expressed by a formula shown below:

organic compound : water =

$$( \alpha + 5 ):(100 - \alpha - 5) \sim (100 - \beta - 10):(\beta + 10)$$

where $\alpha$ designates limit (% by weight) of solubility of organic compound against water, whereas $\beta$ designates limit (% by weight) of solubility of water against organic compound.

There is no limit in the kind of organic compound only if the kind of organic compound is capable of dissolving or swelling organic adherent matters, and the kind of organic coumpoud is at least one kind of compound selectable from a group of those which are exemplified below; organic ester compound, organic hydrocarbon compound, fatty-acid compound, organic ketone compound, halogenated hydrocarbon compound, aldehyde compound, ether compound, heterocyclic compound, alcoholic compound, organic nitrogen compound, animal oil and vegetable oil, and at least one kind of compound selectable from a group comprising derivatives from any of the above-exemplified compounds. Any of the above-exemplified organic compounds may not necessarily be of liquified form. For example, solid organic compound may be mixed with water as of the state being dissolved by any organic solvent.

In terms of organic ester compound, any of those which are exemplified below may be selected; those carboxy monoester such as ethyl acetate, ethyl oleate, ethyl acrylate, butyl palmitate, or methyl methacrylate, those dibasic carboxylic diester such as dimethyl succinate, diethyl succinate, dibutyl succinate, dimethyl adipate, diethyl adipate, dimethyl glutarate, diethyl glutarate, diethyl phthalate, dibutyl phthalate, diethyl tartarate, or dioctyl phthalate, those aliphatic ester compounds such as ethyl $\alpha$ -aminoate, or ethyl L-glutarate, and derivatives from the above compounds; those aromatic ester compounds such as methyl benzoate or triphenyl phosphate and derivatives from these aromatic ester compounds, cyclic ester compound and derivative from it, heterocyclic ester compound such as methyl isonicotinate and derivative from it; and coal oxide, oil oxide, etc.

In terms of organic hydrocarbon compound, any of those which are exemplified below may be used; vegetable oil such as tea tree oil, tall oil, or terpene oil, kerosine, fluid paraffine, heptane, benzene, toluene, or cyclohexane, etc.

In terms of halogenated hydrocarbon compound, 1,1,1-trichloroethane or $\alpha$-chloronaphthalene may be used.

In terms of alcoholic compounds, the following may be used; n-octyl alcohol, n-decyl alcohol, polyethylene glycohol, methyl cellosolve, tertiary amil-alcohol, phenol, benzyl alcohol, or methyl benzyl alcohol, etc.

In terms of aliphatic compound, those which are cited below may be used; benzoic acid, alkenic succinic acid, naphthenic acid, oleic acid, or isononanic acid, etc.

In terms of ketone compound, methylethyl ketone, or methylisobutyl ketone, may be used.

In terms of aldehyde compound, benzaldehyde may be used.

In terms of ether compound, ethylether, diisopropylether, or octylphenylether may be used.

In terms of organic nitrogen compound, N,N-dimethylformaldehyde, diethylamine, aniline, or dichlorohexylamine, may be used.

In terms of heterocyclic compound, N-methyl-2-pyrolydon may be used for treating toner with the method related to the invention.

Among the above described organic compounds, one organic compound may be used or a plurality of organic coumpounds may be used by mixing them.

Any kind of water such as pure water, distilled water, conventional tap-water, or river water, may be used.

In terms of surface active agents, any of those which are exemplified below may be used; higher aliphaticacid metal salt such as sodium laurate or sodium oleate, anionic surface active agent such as sodium alkylbenzenesulphonate, higher alcohol (sodium lauryl sulfate, sodium cetyl sulfate, or sodium stearyl sulfate, for example) ; cationic surface active agent falling under quaternary ammonium salt or amine sakt; and those nonionic surface active agents including alkylene-oxide (ethylene oxide or propylene oxide)- added type nonionic surface active agents such as higher alcohol (lauryl alcohol, cetyl alcohol, palm-oil reduced alcohol, oleic alcohol), alkyl (octic, nonyl, or dodecyl) phenol, or aliphatic acid (stearic acid or oleic acid), or those nonionic surface active agents falling under polyhydric alcohol ester such as sorbitol or sugar ester, for example.

Normally, it is desired that 1 part or more than 1 part by weight of any of those usable surface active agents be added against 100 parts by weight of the blend of organic compound and water.

It is further desired that amounts of asisiting agent is more than 1% weight, most preferably 5-50% by weight, of any of the above described compounds, although not restricted.

In terms of glycol ether, no restriction applies to but any of those which are exemplified below may be used; diethylene glycol monomethylether, diethylene glycol monobutylether, ethylene glycol monomethylether, or ethylene glycol monobutylether.

In terms of pyrolydon derivatives, N-methyl-2-pyrolydon may be used.

In terms of alcohol, the following may be used; isopropyl alcohol or ethanol.

When implementing the inventive method by formulating usable composition, it is suggested to properly blend an optimum amount of selected asisiting agent with a predetermined amound of mixed solution of selected organic coumpound, water and surface-active agent if deemed necessary.

A composition defined in any of the appended claims 17 to 20 comprises water, a surface-active agent, an additive selected from alcohols, glycol-ether, and pyrrolidone derivatives, and less than 15 % by weight of dibasic carboxylic diester representing an organic compound, in which droplets of the organic compound are dispersed in the water.

A composition defined in any of the appended claims 21 and 22 is characterized in that the an organic compound capable of dissolving or wetting adherents attached to the surface of an adherend is dissolved in water.

A composition defined in any of the appended claims 23 and 25 comprises water, a surface-active agent, and an organic compound capable of dissolving or wetting adherents attached to the surface of an adherend, in which the organic compound is dissolved in the water.

Throughout the appended claims 21 to 25, the organic compound may be selected from, but not limited to, N-methyl-2-pyrrolidone, triethylene glycol, dimethyl ether, and diethylene glycol dimethyl ether.

In this description of the present invention, "removal" means removing of adherents from an adherend by one or more of the actions of debonding, cleaning, dispersion, departing, aggregation, and other appropriate manners.

The adherents which can be removed from adherend, e.g. iron, stainless, non-forrous metal, glass, plastics, clothes, tile, concrete wall, wood, rubber, or paper, by the composition of the present invention are resins (and resin-based bonding or thickening agents) including alkyd resin (e.g. short-oil alkyd, medium-oil alkyd, long-oil alkyd, phenol modified alkyd, or vinyl modified alkyd), acrylic resin, acrylic styrene resin, amino resin, polyvinyl chloride resin, polyvinyl acetate resin, and polyester resin, oils (e.g. petroleum grease, silicon grease, anti-corrosion oil, cutting oil, press oil, hardening oil, metal working lubricants such as rolling oil, and wax), inks for e.g. oil markers, ballpoint pens, and color printing, toners for copying machines, and paints such as lacquer and pigmented oil. Also, stains of lipstick color, cooking sauce (e.g. Worcester, ketchup, or mayonnaise), coffee, cocoa, and others attached to clothes and garments can be eliminated and spots of chewing gum on a floor or ground can be removed by the action of the composition of the present invention. It would be understood that for removal of the adherent of a plastic material, the organic compound in the composition of the present invention has to be selected from a specific group which gives no chemical assault to the plastic material.

The procedure of removing such adherents using the composition of the present invention comprises immersing the adherend with the adherents in a liquid form of the composition or applying drops of the composition directly onto the adherents, and after several seconds to tens minutes, rubbing with a rag of dry fabric or scraping with a knife over the surface of the adherend. If necessary, the procedure may be repeated several times until all the adherents are removed from the adherend. It is a good idea to use an ultrasonic cleaner for increasing the cleaning power.

When the composition defined in any of claims 1 to 34 is used for spraying directly to adherents or the adherents are immersed in a liquid phase of the composition, its component of the organic compound acts as an organic solvent on the organic adherents for dissolution, permeation, and swelling. Because of the presence of a continuous or water phase about the organic compound, the adherents removed are not dissolved in the organic compound but remains in a gum form as suspended in the water. Accordingly, the adherents can easily be separated and recovered as a solid substance.

The additive accelerates the dispersion of the components of the composition thus increasing the removing power and minimizing the use of the surface-active agent.

Similarly, when the composition defined in any of claims 35 to 40 is used for spraying directly to adherents or the adherents are immersed in a liquid phase of the composition, its component of the organic compound acts as an organic solvent on the organic adherents for dissolution, permeation, and swelling. In this case, the organic compound remains dissolved in the water thus preventing dissolution of the adherents removed. Accordingly, the adherents can easily be separated in a gum form and recovered as a solid substance.

DETAILED DESCRIPTION OF THE PREFERRED EXAMPLES

The present invention will be described in more details in conjunction with but not limited to the preferred examples.

Groups A t G of compositions and groups J-1 and H of solvents were prepared as below:

GROUP A

| Composition A-1(O/W type ) | |
|---|---|
| dibasic carboxylic diester (dimethyl adipate 17wt%, dimethyl glutarate 66wt%, dimethyl succinate 17wt%) | 8wt% |
| water | 92wt% |

| Composition A-2(O/W type ) | |
|---|---|
| dibasic carboxylic diester (dimethyl adipate 17wt%, dimethyl glutarate 66wt%, dimethyl succinate 17wt%) | 15wt% |
| water | 85wt% |

<u>Composition A-3(O/W type )</u>

dibasic carboxylic diester (dimethyl adipate 17wt%, dimethyl glutarate 66wt%, dimethyl succinate 17wt%)    30wt%

water    70wt%

| Composition A-4(O/W type ) | |
|---|---|
| dibasic carboxylic diester (dimethyl adipate 17wt%, dimethyl glutarate 66wt%, dimethyl succinate 17wt%) | 50wt% |
| water | 50wt% |

| Composition A-5(O/W type ) | |
|---|---|
| dibasic carboxylic diester (dimethyl adipate 17wt%, dimethyl glutarate 66wt%, dimethyl succinate 17wt%) | 80wt% |
| water | 20wt% |

| Composition A-6(O/W type ) | |
|---|---|
| dimethyl succinate | 20wt% |
| water | 80wt% |

| Composition A-7(O/W type ) | |
|---|---|
| dimethyl succinate | 18wt% |
| diethyl succinate | 32wt% |
| water | 50wt% |

5

| Composition A-8(O/W type ) | |
|---|---|
| dimethyl glutarate | 30wt% |
| water | 70wt% |

| Composition A-9(O/W type ) | |
|---|---|
| dimethyl glutarate | 70wt% |
| water | 30wt% |

| Composition A-10(O/W type ) | |
|---|---|
| benzyl alcohol | 20wt% |
| water | 80wt% |

Composition A-11(O/W type )

benzyl alcohol                                                          90wt%

water                                                          10wt%

| Composition A-12(O/W type ) | |
|---|---|
| propylene carbonate | 30wt% |
| water | 70wt% |

| Composition A-13(O/W type ) | |
|---|---|
| propylene carbonate | 85wt% |
| water | 15wt% |

| Composition A-14(O/W type ) | |
|---|---|
| methylbenzyl alcohol | 40wt% |
| water | 60wt% |

| Composition A-15(O/W type ) | |
|---|---|
| tea tree oil | 25wt% |
| water | 75wt% |

| Composition A-16(O/W type ) | |
|---|---|
| toluene | 35wt% |
| water | 65wt% |

| Composition A-17(O/W type ) | |
|---|---|
| methylethyl ketone | 50wt% |
| water | 50wt% |

| Composition A-18(O/W type ) | |
|---|---|
| dibutyl lactate | 10wt% |
| water | 90wt% |

| Composition A-19(O/W type ) | |
|---|---|
| dibutyl lactate | 30wt% |
| water | 70wt% |

Composition A-20(O/W type )

| | |
|---|---|
| dibutyl lactate | 80wt% |
| water | 20wt% |

GROUP B

| Composition B- 1(O/W type ) | |
|---|---|
| dibasic carboxylic diester (dimethyl adipate 17wt%, dimethyl glutarate 66wt%, dimethyl succinate 17wt%) | 15wt% |
| sodium sulfate of butyl oleate | 20wt% |
| polyoxyethylene alkylphenyl ether | 8wt% |
| water | 57wt% |

| Composition B- 2(O/W type ) | |
|---|---|
| dibasic carboxylic diester (dimethyl adipate 17wt%, dimethyl glutarate 66wt%, dimethyl succinate 17wt%) | 30wt% |
| sodium sulfate of butyl oleate | 20wt% |
| polyoxyethylene alkylphenyl ether | 12wt% |
| water | 38wt% |

| Composition B- 3(O/W type ) | |
|---|---|
| dibasic carboxylic diester (dimethyl adipate 17wt%, dimethyl glutarate 66wt%, dimethyl succinate 17wt%) | 50wt% |
| sodium sulfate of butyl oleate | 30wt% |
| polyoxyethylene alkylphenyl ether | 10wt% |
| water | 10wt% |

## Composition B- 4(O/W type )

dibasic carboxylic diester (dimethyl adipate 17wt%, dimethyl glutarate 66wt%, dimethyl succinate 17wt%)          60wt%

sodium sulfate of butyl oleate          20wt%

polyoxyethylene alkylphenyl ether          10wt%

water          10wt%

| Composition B- 5(O/W type ) | |
|---|---|
| dimethyl succinate | 25wt% |
| sodium sulfate of butyl oleate | 20wt% |
| polyoxyethylene alkylphenyl ether | 9wt% |
| water | 46wt% |

| Composition B- 6(O/W type ) | |
|---|---|
| dimethyl succinate | 70wt% |
| sodium sulfate of butyl oleate | 10wt% |
| polyoxyethylene alkylphenyl ether | 5wt% |
| triethanolamine | 5wt% |
| water | 46wt% |

| Composition B- 7(O/W type ) | |
|---|---|
| dimethyl succinate | 20wt% |
| dimethyl glutarate | 30wt% |
| sodium sulfate of butyl oleate | 20wt% |
| polyoxyethylene alkylphenyl ether | 10wt% |
| water | 20wt% |

| Composition B- 8(O/W type ) | |
|---|---|
| diethyl phthalate | 40wt% |
| dimethyl adipate | 10wt% |
| sodium sulfate of butyl oleate | 25wt% |
| polyoxyethylene alkylphenyl ether | 10wt% |
| water | 15wt% |

Composition B- 9(O/W type )

| | |
|---|---|
| diethyl succinate | 30wt% |
| dimethyl succinate | 30wt% |
| sodium sulfate of butyl oleate | 20wt% |
| polyoxyethylene alkylphenyl ether | 7wt% |
| water | 13wt% |

| Composition B-10(O/W type ) | |
|---|---|
| benzyl alcohol | 8wt% |
| sodium sulfate of butyl oleate | 10wt% |
| polyoxyethylene alkylphenyl ether | 7wt% |
| water | 75wt% |

| Composition B-11(O/W type ) | |
|---|---|
| benzyl alcohol | 15wt% |
| sodium sulfate of butyl oleate | 15wt% |
| polyoxyethylene alkylphenyl ether | 9wt% |
| water | 61wt% |

| Composition B-12(O/W type ) | |
|---|---|
| benzyl alcohol | 5wt% |
| dibasic carboxylic diester (dimethyl adipate 17wt%, dimethyl glutarate 66wt%, dimethyl succinate 17wt%) | 10wt% |
| sodium sulfate of butyl oleate | 15wt% |
| polyoxyethylene alkylphenyl ether | 10wt% |
| water | 60wt% |

| Composition B-13(O/W type ) | |
|---|---|
| benzyl alcohol | 50wt% |
| sodium sulfate of butyl oleate | 20wt% |
| polyoxyethylene alkylphenyl ether | 10wt% |
| water | 20wt% |

Composition B-14(O/W type )

benzyl alcohol                                                  80wt%

sodium sulfate of butyl oleate                                  7wt%

polyoxyethylene alkylphenyl ether                               3wt%

water                                                          10wt%

| Composition B-15(O/W type ) | |
|---|---|
| methylethyl ketone | 8wt% |
| sodium sulfate of butyl oleate | 10wt% |
| polyoxyethylene alkylphenyl ether | 7wt% |
| water | 75wt% |

| Composition B-16(O/W type ) | |
|---|---|
| methylethyl ketone | 15wt% |
| sodium sulfate of butyl oleate | 15wt% |
| polyoxyethylene alkylphenyl ether | 10wt% |
| water | 60wt% |

| Composition B-17(O/W type ) | |
|---|---|
| methylethyl ketone | 40wt% |
| sodium sulfate of butyl oleate | 15wt% |
| polyoxyethylene alkylphenyl ether | 8wt% |
| diethanol amido oleate | 3wt% |
| water | 34wt% |

| Composition B-18(O/W type ) | |
|---|---|
| toluene | 15wt% |
| sodium sulfate of butyl oleate | 13wt% |
| polyoxyethylene alkylphenyl ether | 8wt% |
| water | 64wt% |

<u>Composition B-19(O/W type )</u>

toluene                                                         40wt%

sodium sulfate of butyl oleate                  20wt%

polyoxyethylene alkylphenyl ether          10wt%

water                                                          30wt%

| Composition B-20(O/W type ) | |
|---|---|
| tea tree oil | 7wt% |
| sodium sulfate of butyl oleate | 9wt% |
| polyoxyethylene alkylphenyl ether | 4wt% |
| water | 80wt% |

| Composition B-21(O/W type ) | |
|---|---|
| tea tree oil | 15wt% |
| sodium sulfate of butyl oleate | 12wt% |
| polyoxyethylene alkylphenyl ether | 5wt% |
| water | 68wt% |

| Composition B-22(O/W type ) | |
|---|---|
| tea tree oil | 60wt% |
| sodium sulfate of butyl oleate | 20wt% |
| water | 20wt% |

**Composition B-23(O/W type )**

| | |
|---|---|
| dibutyl lactate | 5wt% |
| sodium sulfate of butyl oleate | 15wt% |
| polyoxyethylene alkylphenyl ether | 8wt% |
| water | 72wt% |

**Composition B-24(O/W type )**

| | |
|---|---|
| dibutyl lactate | 30wt% |
| sodium sulfate of butyl oleate | 15wt% |
| diethanol amido oleate | 7wt% |
| polyoxyethylene alkylphenyl ether | 8wt% |
| water | 40wt% |

**Composition B-25(O/W type )**

| | |
|---|---|
| dibasic carboxylic diester (dimethyl adipate 17wt%, dimethyl glutarate 66wt%, dimethyl succinate 17wt%) | 25wt% |
| sodium sulfate of butyl oleate | 18wt% |
| diethanol amido oleate | 7wt% |
| polyoxyethylene alkylphenyl ether | 10wt% |
| tea tree oil | 5wt% |
| water | 35wt% |

**Composition B-26(O/W type )**

| | |
|---|---|
| dimethyl succinate | 10wt% |
| diethyl succinate | 10wt% |
| sodium sulfate of butyl oleate | 20wt% |
| diethanol amido oleate | 5wt% |
| tea tree oil | 0.5wt% |
| water | 54.5wt% |

GROUP C

| Composition C- 1(O/W type ) | |
|---|---|
| dibasic carboxylic diester (dimethyl adipate 17wt%, dimethyl glutarate 66wt%, dimethyl succinate 17wt%) | 20wt% |
| 3 methyl-3 methoxybutanol | 30wt% |
| isopropyl alcohol | 8wt% |
| water | 42wt% |

```
Composition C- 2(O/W type )

    dibasic carboxylic diester (dimethyl adipate 17wt%, dimethyl glutarate 66wt%, dimethyl succinate 17wt%)          40wt%


    N methyl-2-pyrrolidone                                   15wt%

    3 methyl-3 methoxybutanol                                10wt%

    isopropyl alcohol                                         5wt%

    water                                                    30wt%
```

| Composition C- 3(O/W type ) | |
|---|---|
| dibasic carboxylic diester (dimethyl adipate 17wt%, dimethyl glutarate 66wt%, dimethyl succinate 17wt%) | 70wt% |
| N methyl-2-pyrrolidone | 20wt% |
| water | 10wt% |

| Composition C- 4(O/W type ) | |
|---|---|
| dibasic carboxylic diester (dimethyl adipate 17wt%, dimethyl glutarate 66wt%, dimethyl succinate 17wt%) | 55wt% |
| N methyl-2-pyrrolidone | 15wt% |
| 3 methyl-3 methoxybutanol | 10wt% |
| water | 20wt% |

| Composition C- 5(O/W type ) | |
|---|---|
| dimethyl succinate | 25wt% |
| N methyl-2-pyrrolidone | 25wt% |
| 3 methyl-3 methoxybutanol | 10wt% |
| water | 40wt% |

Composition C- 6(O/W type )

| | |
|---|---|
| dimethyl succinate | 15wt% |
| diethyl succinate | 10wt% |
| dimethyl glutarate | 10wt% |
| N methyl-2-pyrrolidone | 20wt% |
| 3 methyl-3 methoxybutanol | 10wt% |
| isopropyl alcohol | 5wt% |
| water | 30wt% |

| Composition C- 7(O/W type ) | |
|---|---|
| diethyl phthalate | 15wt% |
| dimethyl adipate | 15wt% |
| 3 methyl-3 methoxybutanol | 30wt% |
| isopropyl alcohol | 5wt% |
| water | 35wt% |

| Composition C- 8(O/W type ) | |
|---|---|
| propylene carbonate | 60wt% |
| 3 methyl-3 methoxybutanol | 20wt% |
| N methyl-2-pyrrolidone | 10wt% |
| water | 10wt% |

| Composition C- 9(O/W type ) | |
|---|---|
| benzyl alcohol | 25wt% |
| N methyl-2-pyrrolidone | 20wt% |
| 3 methyl-3 methoxybutanol | 10wt% |
| water | 45wt% |

14

| Composition C-10(O/W type ) | |
| --- | --- |
| benzyl alcohol | 40wt% |
| 3 methyl-3 methoxybutanol | 20wt% |
| N methyl-2-pyrrolidone | 20wt% |
| water | 20wt% |

| Composition C-11(O/W type ) | |
| --- | --- |
| benzyl alcohol | 70wt% |
| 3 methyl-3 methoxybutanol | 10wt% |
| N methyl-2-pyrrolidone | 10wt% |
| water | 10wt% |

| Composition C-12(O/W type ) | |
| --- | --- |
| methyl benzyl alcohol | 70wt% |
| N methyl-2-pyrrolidone | 20wt% |
| 3 methyl-3 methoxybutanol | 10wt% |
| isopropyl alcohol | 7wt% |
| water | 33wt% |

| Composition C-13(O/W type ) | |
| --- | --- |
| tea tree oil | 20wt% |
| N methyl-2-pyrrolidone | 20wt% |
| 3 methyl-3 methoxybutanol | 10wt% |
| isopropyl alcohol | 10wt% |
| water | 40wt% |

| Composition C-14(O/W type ) | |
| --- | --- |
| tea tree oil | 60wt% |
| N methyl-2-pyrrolidone | 20wt% |
| water | 20wt% |

| Composition C-15(O/W type ) | |
|---|---|
| toluene | 25wt% |
| N methyl-2-pyrrolidone | 20wt% |
| isopropyl alcohol | 10wt% |
| water | 45wt% |

| Composition C-16(O/W type ) | |
|---|---|
| benzyl alcohol | 13wt% |
| 3 methyl-3 methoxybutanol | 30wt% |
| water | 57wt% |

## Composition C-17(O/W type )

| | |
|---|---|
| tea tree oil | 10wt% |
| 3 methyl-3 methoxybutanol | 20wt% |
| isopropyl alcohol | 5wt% |
| water | 65wt% |

| Composition C-18(O/W type ) | |
|---|---|
| toluene | 12wt% |
| 3 methyl-3 methoxybutanol | 20wt% |
| N methyl-2-pyrrolidone | 5wt% |
| water | 63wt% |

| Composition C-19(O/W type ) | |
|---|---|
| methylethyl ketone | 13wt% |
| 3 methyl-3 methoxybutanol | 20wt% |
| isopropyl alcohol | 5wt% |
| water | 62wt% |

| Composition C-20(O/W type ) | |
|---|---|
| methylethyl ketone | 40wt% |
| N methyl-2-pyrrolidone | 30wt% |
| 3 methyl-3 methoxybutanol | 10wt% |
| water | 20wt% |

GROUP D

<u>Composition D- 1(O/W type )</u>

| | |
|---|---|
| dibasic carboxylic diester (dimethyl adipate 17wt%, dimethyl glutarate 66wt%, dimethyl succinate 17wt%) | 20wt% |
| 3 methyl-3 methoxybutanol | 18wt% |
| sodium sulfate of butyl oleate | 10wt% |
| polyoxyethylene alkylphenyl ether | 7wt% |
| water | 45wt% |

| Composition D- 2(O/W type ) | |
|---|---|
| dibasic carboxylic diester (dimethyl adipate 17wt%, dimethyl glutarate 66wt%, dimethyl succinate 17wt%) | 25wt% |
| N methyl-2-pyrrolidone | 15wt% |
| 3 methyl-3 methoxybutanol | 10wt% |
| sodium sulfate of butyl oleate | 12.5wt% |
| polyoxyethylene alkylphenyl ether | 7.5wt% |
| water | 30wt% |

| Composition D- 3(O/W type ) | |
|---|---|
| dibasic carboxylic diester (dimethyl adipate 17wt%, dimethyl glutarate 66wt%, dimethyl succinate 17wt%) | 40wt% |
| 3 methyl-3 methoxybutanol | 40wt% |
| diethanol amido olerate | 10wt% |
| water | 10wt% |

| Composition D- 4(O/W type ) | |
|---|---|
| dibasic carboxylic diester (dimethyl adipate 17wt%, dimethyl glutarate 66wt%, dimethyl succinate 17wt%) | 35wt% |
| N methyl-2-pyrrolidone | 10wt% |
| 3 methyl-3 methoxybutanol | 10wt% |
| isopropyl alcohol | 10wt% |
| diethanol amido olerate | 5wt% |
| water | 30wt% |

Composition D- 5(O/W type )

dimethyl succinate                    15wt%

diethyl succinate                     5wt%

3 methyl-3 methoxybutanol              20wt%

sodium sulfate of butyl oleate        13wt%

polyoxyethylene alkylphenyl ether     8wt%

water                                 39wt%

| Composition D- 6(O/W type ) | |
|---|---|
| dimethyl succinate | 20wt% |
| diethyl succinate | 10wt% |
| dimethyl glutarate | 10wt% |
| 3 methyl-3 methoxybutanol | 20wt% |
| N methyl-2-pyrrolidone | 15wt% |
| diethanol amido olerate | 5wt% |
| water | 20wt% |

| Composition D- 7(O/W type ) | |
|---|---|
| dimethyl succinate | 30wt% |
| dimethyl adipate | 15wt% |
| N methyl-2-pyrrolidone | 35wt% |
| diethanol amido olerate | 5wt% |
| water | 15wt% |

| Composition D- 8(O/W type ) | |
| --- | --- |
| propylene carbonate | 25wt% |
| 3 methyl-3 methoxybutanol | 15wt% |
| N methyl-2-pyrrolidone | 10wt% |
| isopropyl alcohol | 5wt% |
| diethanol amido olerate | 5wt% |
| water | 40wt% |

Composition D- 9(O/W type )

propylene carbonate 40wt%

3 methyl-3 methoxybutanol 15wt%

N methyl-2-pyrrolidone 20wt%

diethanol amido olerate 10wt%

water 15wt%

| Composition D-10(O/W type ) | |
| --- | --- |
| propylene carbonate | 20wt% |
| dibasic carboxylic diester (dimethyl adipate 17wt%, dimethyl glutarate 66wt%, dimethyl succinate 17wt%) | 25wt% |
| N methyl-2-pyrrolidone | 20wt% |
| 3 methyl-3 methoxybutanol | 15wt% |
| diethanol amido olerate | 5wt% |
| water | 15wt% |

| Composition D-11(O/W type ) | |
| --- | --- |
| benzyl alcohol | 6wt% |
| 3 methyl-3 methoxybutanol | 10wt% |
| sodium sulfate of butyl oleate | 7wt% |
| polyoxy alkylene monoalkyl ether | 2wt% |
| polyoxyethylene alkylphenyl ether | 3wt% |
| water | 72wt% |

| Composition D-12(O/W type ) | |
|---|---|
| benzyl alcohol | 15wt% |
| 3 methyl-3 methoxybutanol | 15wt% |
| sodium sulfate of butyl oleate | 9wt% |
| polyoxy alkylene monoalkyl ether | 2wt% |
| polyoxyethylene alkylphenyl ether | 3wt% |
| water | 56wt% |

## Composition D-13(O/W type )

benzyl alcohol                                      45wt%

N methyl-2-pyrrolidone                              30wt%

diethanol amido olerate                              5wt%

water                                               20wt%

| Composition D-14(O/W type ) | |
|---|---|
| benzyl alcohol | 7wt% |
| dibasic carboxylic diester (dimethyl adipate 17wt%, dimethyl glutarate 66wt%, dimethyl succinate 17wt%) | 18wt% |
| N methyl-2-pyrrolidone | 15wt% |
| 3 methyl-3 methoxybutanol | 10wt% |
| sodium sulfate of butyl oleate | 12wt% |
| polyoxyethylene alkylphenyl ether | 8wt% |
| water | 30wt% |

| Composition D-15(O/W type ) | |
|---|---|
| toluene | 8wt% |
| 3 methyl-3 methoxybutanol | 13wt% |
| sodium sulfate of butyl oleate | 7wt% |
| polyoxy alkylene monoalkyl ether | 1wt% |
| polyoxyethylene alkylphenyl ether | 2wt% |
| water | 69wt% |

| Composition D-16(O/W type ) | |
|---|---|
| toluene | 6wt% |
| dimethyl succinate | 9wt% |
| 3 methyl-3 methoxybutanol | 15wt% |
| sodium sulfate of butyl oleate | 9wt% |
| polyoxy alkylene monoalkyl ether | 1wt% |
| polyoxyethylene alkylphenyl ether | 2wt% |
| water | 58wt% |

| Composition D-17(O/W type ) | |
|---|---|
| toluene | 40wt% |
| N methyl-2-pyrrolidone | 20wt% |
| 3 methyl-3 methoxybutanol | 10wt% |
| diethanol amido olerate | 7wt% |
| water | 23wt% |

| Composition D-18(O/W type ) | |
|---|---|
| methylethyl ketone | 13wt% |
| 3 methyl-3 methoxybutanol | 15wt% |
| sodium sulfate of butyl oleate | 9wt% |
| polyoxy alkylene monoalkyl ether | 2wt% |
| polyoxyethylene alkylphenyl ether | 2wt% |
| water | 59wt% |

| Composition D-19(O/W type ) | |
|---|---|
| methylethyl ketone | 25wt% |
| 3 methyl-3 methoxybutanol | 25wt% |
| N methyl-2-pyrrolidone | 10wt% |
| diethanol amido olerate | 5wt% |
| water | 35wt% |

| Composition D-20(O/W type ) | |
| --- | --- |
| tea tree oil | 8wt% |
| 3 methyl-3 methoxybutanol | 13wt% |
| isopropyl alcohol | 5wt% |
| sodium sulfate of butyl oleate | 7wt% |
| polyoxyethylene alkylphenyl ether | 3wt% |
| water | 64wt% |

Composition D-21(O/W type )

```
tea tree oil                              30wt%

3 methyl-3 methoxybutanol                 20wt%

N methyl-2-pyrrolidone                    10wt%

diethanol amido olerate                   10wt%

water                                     30wt%
```

| Composition D-22(O/W type ) | |
| --- | --- |
| dibasic carboxylic diester (dimethyl adipate 17wt%, dimethyl glutarate 66wt%, dimethyl succinate 17wt%) | 30wt% |
| N methyl-2-pyrrolidone | 25wt% |
| triethylene glycol dimethyl ether | 25wt% |
| polyoxy alkylene monoalkyl ether | 5wt% |
| water | 15wt% |

| Composition D-23(O/W type ) | |
| --- | --- |
| dibasic carboxylic diester (dimethyl adipate 17wt%, dimethyl glutarate 66wt%, dimethyl succinate 17wt%) | 30wt% |
| N methyl-2-pyrrolidone | 25wt% |
| diethylene glycol ethyl ether | 25wt% |
| sodium sulfate of butyl oleate | 5wt% |
| water | 15wt% |

Composition D-24(O/W type )

| | |
|---|---|
| dibasic carboxylic diester (dimethyl adipate 17wt%, dimethyl glutarate 66wt%, dimethyl succinate 17wt%) | 10wt% |
| 3 methyl-3 methoxybutanol | 10wt% |
| sodium sulfate of butyl oleate | 6wt% |
| polyoxy alkylene monoalkyl ether | 1.4wt% |
| polyoxyethylene alkylphenyl ether | 1.3wt% |
| water | 71.3wt% |

Composition D-25(O/W type )

| | |
|---|---|
| dibasic carboxylic diester (dimethyl adipate 17wt%, dimethyl glutarate 66wt%, dimethyl succinate 17wt%) | 8wt% |
| 3 methyl-3 methoxybutanol | 8wt% |
| sodium sulfate of butyl oleate | 4.8wt% |
| polyoxy alkylene monoalkyl ether | 1.0wt% |
| polyoxyethylene alkylphenyl ether | 1.3wt% |
| water | 76.9wt% |

Composition D-26(O/W type )

| | |
|---|---|
| dibasic carboxylic diester (dimethyl adipate 17wt%, dimethyl glutarate 66wt%, dimethyl succinate 17wt%) | 5wt% |
| 3 methyl-3 methoxybutanol | 5wt% |
| sodium sulfate of butyl oleate | 3wt% |
| polyoxy alkylene monoalkyl ether | 0.7wt% |
| polyoxyethylene alkylphenyl ether | 0.8wt% |
| water | 85.5wt% |

Composition D-27(O/W type )

| | |
|---|---|
| dibasic carboxylic diester (dimethyl adipate 17wt%, dimethyl glutarate 66wt%, dimethyl succinate 17wt%) | 20wt% |
| N methyl-2-pyrrolidone | 20wt% |
| triethylene glycol dimethyl ether | 40wt% |
| sodium sulfate of butyl oleate | 5wt% |
| water | 15wt% |

## Composition D-28(O/W type )

dibasic carboxylic diester (dimethyl adipate 17wt%, dimethyl glutarate 66wt%, dimethyl succinate 17wt%)　　　8wt%

N methyl-2-pyrrolidone　　　10wt%

sodium sulfate of butyl oleate　　　4.8wt%

polyoxy alkylene monoalkyl ether　　　1.0wt%

polyoxyethylene alkylphenyl ether　　　1.3wt%

water　　　76.9wt%

| Composition D-29(O/W type ) | |
| --- | --- |
| dimethyl phthalate | 10wt% |
| 3 methyl-3 methoxybutanol | 10wt% |
| sodium sulfate of butyl oleate | 6wt% |
| polyoxy alkylene monoalkyl ether | 1.4wt% |
| polyoxyethylene alkylphenyl ether | 8.4wt% |
| water | 64.2wt% |

| Composition D-30(O/W type ) | |
| --- | --- |
| dimethyl phthalate | 5wt% |
| 3 methyl-3 methoxybutanol | 15wt% |
| sodium sulfate of butyl oleate | 3wt% |
| polyoxy alkylene monoalkyl ether | 1wt% |
| polyoxyethylene alkylphenyl ether | 5.7wt% |
| water | 70.3wt% |

| Composition D-31(O/W type ) | |
| --- | --- |
| dimethyl phthalate | 15wt% |
| 3 methyl-3 methoxybutanol | 15wt% |
| sodium sulfate of butyl oleate | 9wt% |
| polyoxy alkylene monoalkyl ether | 2wt% |
| polyoxyethylene alkylphenyl ether | 12.6wt% |
| water | 46.4wt% |

Composition D-32(O/W type )

| | |
|---|---|
| dimethyl phthalate | 8wt% |
| N methyl-2-pyrrolidone | 16wt% |
| sodium sulfate of butyl oleate | 4.8wt% |
| polyoxy alkylene monoalkyl ether | 2wt% |
| polyoxyethylene alkylphenyl ether | 7.4wt% |
| water | 61.8wt% |

| Composition D-33(O/W type ) | |
|---|---|
| dimethyl phthalate | 5.3wt% |
| 3 methyl-3 methoxybutanol | 5.3wt% |
| sodium sulfate of butyl oleate | 3.2wt% |
| polyoxy alkylene monoalkyl ether | 0.5wt% |
| polyoxyethylene alkylphenyl ether | 6.0wt% |
| water | 79.7wt% |

| Composition D-34(O/W type ) | |
|---|---|
| dibasic carboxylic diester (dimethyl adipate 17wt%, dimethyl glutarate 66wt%, dimethyl succinate 17wt%) | 30wt% |
| 3 methyl-3 methoxybutanol | 30wt% |
| sodium sulfate of butyl oleate | 10wt% |
| polyoxy alkylene monoalkyl ether | 2wt% |
| polyoxyethylene alkylphenyl ether | 4wt% |
| water | 24wt% |

Composition D-35(O/W type )

| | |
|---|---|
| dibasic carboxylic diester (dimethyl adipate 17wt%, dimethyl glutarate 66wt%, dimethyl succinate 17wt%) | 40wt% |
| 3 methyl-3 methoxybutanol | 25wt% |
| sodium sulfate of butyl oleate | 20wt% |
| polyoxy alkylene monoalkyl ether | 2wt% |
| polyoxyethylene alkylphenyl ether | 6wt% |

water      9wt%

| Composition D-36(O/W type ) | |
|---|---|
| dibasic carboxylic diester (dimethyl adipate 17wt%, dimethyl glutarate 66wt%, dimethyl succinate 17wt%) | 8wt% |
| 3 methyl-3 methoxybutanol | 8wt% |
| sodium sulfate of butyl oleate | 4.8wt% |
| polyoxy alkylene monoalkyl ether | 1.0wt% |
| polyoxyethylene alkylphenyl ether | 1.3wt% |
| triethanolamine | 0.5wt% |
| water | 76.4wt% |

| Composition D-37(O/W type ) | |
|---|---|
| dibasic carboxylic diester (dimethyl adipate 17wt%, dimethyl glutarate 66wt%, dimethyl succinate 17wt%) | 5wt% |
| 3 methyl-3 methoxybutanol | 5wt% |
| sodium sulfate of butyl oleate | 3wt% |
| polyoxy alkylene monoalkyl ether | 0.7wt% |
| polyoxyethylene alkylphenyl ether | 0.8wt% |
| triethanolamine | 1.0wt% |
| water | 84.5wt% |

Composition D-38(O/W type )

dibasic carboxylic diester (dimethyl adipate 17wt%, dimethyl glutarate 66wt%, dimethyl succinate 17wt%)    15wt%

3 methyl-3 methoxybutanol    15wt%

sodium sulfate of butyl oleate    9wt%

polyoxy alkylene monoalkyl ether    2wt%

polyoxyethylene alkylphenyl ether    2.5wt%

triethanolamine    1.0wt%

water    55.5wt%

| Composition D-39(O/W type ) | |
|---|---|
| dibasic carboxylic diester (dimethyl adipate 17wt%, dimethyl glutarate 66wt%, dimethyl succinate 17wt%) | 20wt% |
| 3 methyl-3 methoxybutanol | 20wt% |
| sodium sulfate of butyl oleate | 12wt% |
| polyoxy alkylene monoalkyl ether | 2.6wt% |
| polyoxyethylene alkylphenyl ether | 3.3wt% |
| water | 42.1wt% |

| Composition D-40(O/W type ) | |
|---|---|
| tea tree oil | 15wt% |
| 3 methyl-3 methoxybutanol | 15wt% |
| sodium sulfate of butyl oleate | 9wt% |
| polyoxy alkylene monoalkyl ether | 2wt% |
| polyoxyethylene alkylphenyl ether | 12.6wt% |
| water | 46.4wt% |

| Composition D-41(O/W type ) | |
|---|---|
| tea tree oil | 8wt% |
| 3 methyl-3 methoxybutanol | 8wt% |
| sodium sulfate of butyl oleate | 4.8wt% |
| polyoxy alkylene monoalkyl ether | 1.0wt% |
| polyoxyethylene alkylphenyl ether | 1.3wt% |
| water | 76.9wt% |

## Composition D-42(O/W type )

| | |
|---|---|
| propylene carbonate | 15wt% |
| 3 methyl-3 methoxybutanol | 17wt% |
| sodium sulfate of butyl oleate | 9wt% |
| polyoxy alkylene monoalkyl ether | 2wt% |
| polyoxyethylene alkylphenyl ether | 3wt% |
| tea tree oil | 1wt% |
| water | 53wt% |

GROUP E

| Composition E- 1(O/W type ) | |
|---|---|
| dibasic carboxylic diester (dimethyl adipate 17wt%, dimethyl glutarate 66wt%, dimethyl succinate 17wt%) | 15wt% |
| 3 methyl-3 methoxybutanol | 15wt% |
| sodium sulfate of butyl oleate | 9wt% |
| polyoxy alkylene monoalkyl ether | 2wt% |
| polyoxyethylene alkylphenyl ether | 2.5wt% |
| water | 56.5wt% |

| Composition E- 2(O/W type ) | |
|---|---|
| dibasic carboxylic diester (dimethyl adipate 17wt%, dimethyl glutarate 66wt%, dimethyl succinate 17wt%) | 10wt% |
| 3 methyl-3 methoxybutanol | 15wt% |
| sodium sulfate of butyl oleate | 8wt% |
| polyoxy alkylene monoalkyl ether | 1.5wt% |
| polyoxyethylene alkylphenyl ether | 2.5wt% |
| water | 63wt% |

## Composition E- 3(O/W type )

| | |
|---|---|
| dibasic carboxylic diester (dimethyl adipate 17wt%, dimethyl glutarate 66wt%, dimethyl succinate 17wt%) | 8wt% |
| 3 methyl-3 methoxybutanol | 12wt% |
| sodium sulfate of butyl oleate | 8wt% |
| polyoxy alkylene monoalkyl ether | 1wt% |
| polyoxyethylene alkylphenyl ether | 2.5wt% |
| water | 68.5wt% |

| Composition E- 4(O/W type ) | |
|---|---|
| dibasic carboxylic diester (dimethyl adipate 17wt%, dimethyl glutarate 66wt%, dimethyl succinate 17wt%) | 5wt% |
| 3 methyl-3 methoxybutanol | 8wt% |
| sodium sulfate of butyl oleate | 5wt% |
| polyoxy alkylene monoalkyl ether | 0.5wt% |
| polyoxyethylene alkylphenyl ether | 1.5wt% |
| water | 80wt% |

| Composition E- 5(O/W type ) | |
|---|---|
| dibasic carboxylic diester (dimethyl adipate 17wt%, dimethyl glutarate 66wt%, dimethyl succinate 17wt%) | 2wt% |
| 3 methyl-3 methoxybutanol | 5wt% |
| sodium sulfate of butyl oleate | 4wt% |
| polyoxy alkylene monoalkyl ether | 0.5wt% |
| polyoxyethylene alkylphenyl ether | 1wt% |
| water | 87.5wt% |

Composition E- 6(O/W type )

| | |
|---|---|
| dimethyl succinate | 10wt% |
| diethyl succinate | 5wt% |
| 3 methyl-3 methoxybutanol | 15wt% |
| N methyl-2-pyrrolidone | 3wt% |
| sodium sulfate of butyl oleate | 9wt% |
| polyoxy alkylene monoalkyl ether | 1wt% |
| polyoxyethylene alkylphenyl ether | 2.5wt% |
| water | 87.5wt% |

| Composition E- 7(O/W type ) | |
|---|---|
| dibasic carboxylic diester (dimethyl adipate 17wt%, dimethyl glutarate 66wt%, dimethyl succinate 17wt%) | 8wt% |
| N methyl-2-pyrrolidone | 10wt% |
| isopropyl alcohol | 5wt% |
| sodium sulfate of butyl oleate | 6wt% |
| polyoxyethylene alkylphenyl ether | 2wt% |
| water | 69wt% |

| Composition E- 8(O/W type ) | |
|---|---|
| dimethyl succinate | 5wt% |
| diethyl adipate | 5wt% |
| 3 methyl-3 methoxybutanol | 10wt% |
| N methyl-2-pyrrolidone | 5wt% |
| sodium sulfate of butyl oleate | 6wt% |
| polyoxyethylene alkylphenyl ether | 2wt% |
| water | 67wt% |

| Composition E- 9(O/W type ) | |
|---|---|
| dimethyl glutarate | 7wt% |
| diethyl glutarate | 5wt% |
| 3 methyl-3 methoxybutanol | 15wt% |
| sodium sulfate of butyl oleate | 9wt% |
| polyoxy alkylene monoalkyl ether | 1wt% |
| polyoxyethylene alkylphenyl ether | 2.5wt% |
| water | 60.5wt% |

Composition E-10(O/W type )

| | |
|---|---|
| dibutyl phthalate | 9wt% |
| 3 methyl-3 methoxybutanol | 20wt% |
| N methyl-2-pyrrolidone | 10wt% |
| sodium sulfate of butyl oleate | 7wt% |
| water | 54wt% |

| Composition E-11(O/W type ) | |
|---|---|
| diethyl tartarate | 12wt% |
| 3 methyl-3 methoxybutanol | 15wt% |
| sodium sulfate of butyl oleate | 9wt% |
| polyoxy alkylene monoalkyl ether | 2wt% |
| polyoxyethylene alkylphenyl ether | 2wt% |
| water | 60wt% |

| Composition E-12(O/W type ) | |
|---|---|
| dimethyl succinate | 5wt% |
| 3 methyl-3 methoxybutanol | 10wt% |
| sodium sulfate of butyl oleate | 5wt% |
| polyoxy alkylene monoalkyl ether | 0.5wt% |
| polyoxyethylene alkylphenyl ether | 1.5wt% |
| water | 78wt% |

| Composition E-13(O/W type ) | |
|---|---|
| dimethyl succinate | 2wt% |
| 3 methyl-3 methoxybutanol | 7wt% |
| sodium sulfate of butyl oleate | 5wt% |
| polyoxy alkylene monoalkyl ether | 0.5wt% |
| polyoxyethylene alkylphenyl ether | 1.0wt% |
| water | 84.5wt% |

Composition E-14(O/W type )

| | |
|---|---|
| dimethyl succinate | 15wt% |
| 3 methyl-3 methoxybutanol | 18wt% |
| tea tree oil | 1wt% |
| sodium sulfate of butyl oleate | 9wt% |
| polyoxy alkylene monoalkyl ether | 2wt% |
| polyoxyethylene alkylphenyl ether | 3wt% |
| water | 52wt% |

| Composition E-15(O/W type ) | |
|---|---|
| dibasic carboxylic diester (dimethyl adipate 17wt%, dimethyl glutarate 66wt%, dimethyl succinate 17wt%) | 12wt% |
| 3 methyl-3 methoxybutanol | 16wt% |
| tea tree oil | 0.5wt% |
| sodium sulfate of butyl oleate | 9wt% |
| polyoxy alkylene monoalkyl ether | 2wt% |
| polyoxyethylene alkylphenyl ether | 3wt% |
| water | 57.5wt% |

GROUP F

| Composition F- 1(O/W type ) | |
|---|---|
| N methyl-2-pyrrolidone | 90wt% |
| water | 10wt% |

| Composition F- 2(O/W type ) | |
|---|---|
| N methyl-2-pyrrolidone | 80wt% |
| water | 20wt% |

## Composition F- 3(O/W type )

| | |
|---|---|
| N methyl-2-pyrrolidone | 70wt% |
| water | 30wt% |

| Composition F- 4(O/W type ) | |
|---|---|
| N methyl-2-pyrrolidone | 50wt% |
| water | 50wt% |

| Composition F- 5(O/W type ) | |
|---|---|
| triethylene glycol dimethyl ether | 90wt% |
| water | 10wt% |

| Composition F- 6(O/W type ) | |
|---|---|
| triethylene glycol dimethyl ether | 70wt% |
| water | 30wt% |

| Composition F- 7(O/W type ) | |
|---|---|
| diethylene glycol dimethyl ether | 80wt% |
| water | 20wt% |

| Composition F- 8(O/W type ) | |
|---|---|
| diethylene glycol dimethyl ether | 60wt% |
| water | 40wt% |

| Composition F- 9(O/W type ) | |
|---|---|
| N methyl-2-pyrrolidone | 60wt% |
| triethylene glycol dimethyl ether | 15wt% |
| etyl alcohol | 5wt% |
| water | 20wt% |

| Composition F-10(O/W type ) | |
|---|---|
| N methyl-2-pyrrolidone | 70wt% |
| diethylene glycol dimethyl ether | 10wt% |
| isopropyl alcohol | 5wt% |
| water | 15wt% |

Composition F-11(O/W type )

diethylene glycol dimethyl ether                     60wt%

water                     40wt%

| Composition F-12(O/W type ) | |
|---|---|
| diethylene glycol dimethyl ether | 80wt% |
| water | 20wt% |

| Composition F-13(O/W type ) | |
|---|---|
| diethylene glycol dimethyl ether | 60wt% |
| N methyl-2-pyrrolidone | 20wt% |
| water | 20wt% |

GROUP G

| Composition G- 1(O/W type ) | |
|---|---|
| N methyl-2-pyrrolidone | 70wt% |
| diethanol amido olerate | 10wt% |
| water | 20wt% |

| Composition G- 2(O/W type ) | |
|---|---|
| N methyl-2-pyrrolidone | 80wt% |
| diethanol amido olerate | 3wt% |
| water | 17wt% |

| Composition G- 3(O/W type ) | |
|---|---|
| N methyl-2-pyrrolidone | 50wt% |
| diethanol amido olerate | 10wt% |
| water | 40wt% |

Composition G- 4(O/W type )

N methyl-2-pyrrolidone                                        75wt%

polyoxy alkylene monoalkyl ether                             5wt%

water                                                        20wt%

| Composition G- 5(O/W type ) | |
|---|---|
| triethylene glycol dimethyl ether | 60wt% |
| N methyl-2-pyrrolidone | 10wt% |
| diethanol amido olerate | 10wt% |
| water | 20wt% |

| Composition G- 6(O/W type ) | |
|---|---|
| triethylene glycol dimethyl ether | 70wt% |
| polyoxy alkylene monoalkyl ether | 5wt% |
| diethanol amido olerate | 5wt% |
| water | 20wt% |

| Composition G- 7(O/W type ) | |
|---|---|
| diethylene glycol dimethyl ether | 80wt% |
| diethanol amido olerate | 5wt% |
| water | 15wt% |

| Composition G- 8(O/W type ) | |
|---|---|
| diethylene glycol dimethyl ether | 65wt% |
| polyoxy alkylene monoalkyl ether | 5wt% |
| diethanol amido olerate | 5wt% |
| water | 25wt% |

| Composition G- 9(O/W type ) | |
|---|---|
| N methyl-2-pyrrolidone | 60wt% |
| diethylene glycol dimethyl ether | 20wt% |
| diethanol amido olerate | 5wt% |
| water | 15wt% |

## Composition G-10(O/W type )

diethylene glycol dimethyl ether        80wt%

polyoxy alkylene monoalkyl ether        5wt%

water        15wt%

| Composition G-11(O/W type ) | |
|---|---|
| diethylene glycol dimethyl ether | 60wt% |
| N methyl-2-pyrrolidone | 15wt% |
| diethanol amido olerate | 3wt% |
| sodium sulfate of butyl oleate | 7wt% |
| water | 15wt% |

GROUP H

| Solvent H- 1 | |
|---|---|
| dibasic carboxylic diester (dimethyl adipate 17wt%, dimethyl glutarate 66wt%, dimethyl succinate 17wt%) | 100wt% |

| Solvent H- 2 | |
|---|---|
| dimethyl succinate | 100wt% |

| Solvent H- 3 | |
|---|---|
| dimethyl succinate | 40wt% |
| diethyl succinate | 60wt% |

| Solvent H- 4 | |
|---|---|
| dimethyl glutarate | 100wt% |

| Solvent H- 5 | |
|---|---|
| benzyl alcohol | 100wt% |

| Solvent H- 6 | |
|---|---|
| propylene carbonate | 100wt% |

| Solvent H- 7 | |
|---|---|
| methylbenzyl alcohol | 100wt% |

| Solvent H- 8 | |
|---|---|
| tea tree oil | 100wt% |

| Solvent H- 9 | |
|---|---|
| toluene | 100wt% |

| Solvent H-10 | |
|---|---|
| methylethyl ketone | 100wt% |

| Solvent H-11 | |
|---|---|
| diethyl glutarate | 100wt% |

| Solvent H-12 | |
|---|---|
| diethyl phthalate | 100wt% |

| Solvent H-13 | |
|---|---|
| diethyl adipate | 100wt% |

| Solvent H-14 | |
|---|---|
| N methyl-2-pyrrolidone | 100wt% |

| Solvent H-15 | |
|---|---|
| diethyl tartarate | 100wt% |

| Solvent H-16 | |
|---|---|
| triethylene glycol dimethyl ether | 100wt% |

| Solvent H-17 | |
|---|---|
| diethylene glycol dimethyl ether | 100wt% |

| Solvent H-18 | |
|---|---|
| diethylene glycol ethyl ether | 100wt% |

| Solvent H-19 | |
|---|---|
| dibutyl lactate | 100wt% |

| Solvent H-20 | |
|---|---|
| chloroform | 100wt% |

Solvent H-21

dibasic carboxylic diester (dimethyl adipate 17wt%, dimethyl glutarate 66wt%, dimethyl succinate 17wt%)          15wt%

3 methyl-3 methoxybutanol          85wt%

| Solvent H-22 | |
|---|---|
| dibasic carboxylic diester (dimethyl adipate 17wt%, dimethyl glutarate 66wt%, dimethyl succinate 17wt%) | 8wt% |
| 3 methyl-3 methoxybutanol | 92wt% |

| Composition J- 1(W/O type ) | |
|---|---|
| dimethyl phthalate | 5.3wt% |
| 3 methyl-3 methoxybutanol | 5.3wt% |
| sodium sulfate of butyl oleate | 3.2wt% |
| polyoxy alkylene monoalkyl ether | 0.5wt% |
| polyoxyethylene alkylphenyl ether | 6.0wt% |
| water | 79.7wt% |

In the above compositions or solvents, tea tree oil is taken out from tea tree (natural tree) made in Australia, and includes the following contents:

| 1,8 cineole | 9.1wt% |
|---|---|
| P-cymene(isopropylemethylbenzene) | 16.4wt% |
| terpinene-4-ol | 31.2wt% |
| $\alpha$-terpineol | 3.5wt% |

In terms of sodium sulfate of butyl oleate, Pucowet SN-241 made by Sun Nopco k.k. is used.

Example 1

Sheets of paper, 64 g/cm$^2$, on which a black toner including a binder of polystyrene acrylic resin had entirely been deposited were immersed in the liquid compositions of their respective groups A to G listed in Tables 1 to 6.

Then, the paper sheets were scrubbed for a given time with a magnet bar (rotor) which has an annular brush (namely, a Nylon 6 brush made by Nippon Seal) and rotates at a speed of 100 rpm, and examined for removal of the toner. The results are shown in Tables 1 to 6 with relation to the processing temperatures and durations.

As shown, the symbols ⊚ , ○ , △ , and × represent effects of excellent removal, good removal, partial removal, and no removal respectively.

Comparative example 1

Except that the compositions of the groups A to G were replaced with solvents selected from the group H and a composition J-1 shown in Tables 7 and 8, the same procedure as of Example 1 was carried out for examining the removal of the toner. The results in relation with the temperatures and durations are shown in Tables 7 and 8.

As apparent from Tables 1 to 6, the compositions of the present invention cause the toner to be favorably removed from the paper sheets without giving no damage to the paper which can thus be reused.

On the other hand, the conventional solvents allow dissolution of the toner. As the result, the toner tends to degrade the solvents and penetrate the paper sheets for preventing the reuse.

Example 2

OHP (overhead projector) sheets (made of polyester resin) on which a black toner including a binder of polystyrene acrylic resin had entirely been deposited were immersed in the liquid compositions of their respective groups A to G listed in Tables 9 to 15. Then, the OHP sheets were scrubbed for a given time with a magnet bar (rotor) which has an annular brush (namely, a Nylon 6 brush made by Nippon Seal) and rotates at a speed of 100 rpm, and examined for removal of the toner. The results are shown in Tables 9 to 15 with relation to the processing temperatures and durations.

In Tables 9 to 15, the symbols ⊚ , ○ , △ , and × represent effects of excellent removal, good removal, partial removal, and no removal respectively. Further, agitation of the composition employed or not employed are marked with ○ and × respectively.

As apparent from Tables 9 to 15, the compositions of the present invention cause the toner to be favorably removed from the OHP sheets without giving no damage to the OHP material which can thus be reused.

## Example 3

A 30-mm diameter photosensitive drum installed in a used, life-expired Canon copying machine (and made by covering an epoxy-coated aluminum tube with an organic photosensitive layer which contains a binder of polycarbonate) was immersed in each of the liquid compositions of their respective groups A to G listed in Tables 16 to 20. Then, one or more actions of ultrasonic cleaning, agitation of the composition, and turning of the drum were conducted for accelerating the removal of the organic photosensitive layer while the drum being immersed in the composition. The results of removal in relation to the processing temperature, duration, ultrasonic cleaning (denoted as "ultrasonic" in Tables), agitation of the composition (denoted as "agitation"), and/or turning of the drum (denoted as "turning") are also shown in Tables 16 to 20.

In Tables 16 to 20, the symbols ◎ , ○ , Δ , and × represent effects of excellent removal, good removal, partial removal, and no removal respectively. Also, the actions employed and not employed are marked with ○ and × respectively.

As apparent from Tables 16 to 20, the compositions of the present invention cause the organic photosensitive layer to be readily removed from the epoxy-coated aluminum tube without giving no damage to the material surface which can thus be reused. The resin of the organic photosensitive layer is hardly dissolved in the composition and can be filtered for disposal thus keeping the composition clean and increasing its operating life.

## Example 4

A stainless steel container of a tubular shape, 30 cm in diameter and 40 cm in height, arranged capable of producing tiny bubbles of air from bottom with a compressor was provided for filling with each of the liquid compositions of their respective groups A to G listed in Table 21 to 24.

Test pieces of 15x15 cm prepared by cutting an used automobile bumper whose surface composed of polypropylene and rubber is coated with acrylic coatings were immersed in the different compositions respectively with which the stainless steel container was filled. Then, the air was supplied for bubbling the composition to accelerate the removal of the acrylic coatings from the bumper body. The results of removal in relation with the processing temperatures and durations are also shown in Tables 21 to 24. Further, in some cases, polyolefin beads of 1 to 3 mm in diameter are additionary employed to further increase the effects of bubbling, or ultrasonic cleaning is embloyed in addition to bubbling.

In Tables 21 to 24, the symbols ◎ , ○ , Δ , and × represent effects of instant removal, good removal, partial removal, and no removal respectively. Further, beads employed or not employed are marked with ○ and × respectively, and ultrasonic cleaning employed or not employed are also marked with ○ and × respectively.

As apparent from Tables 21 to 24, the compositions of the present invention cause the urethane coatings to be readily removed from the bumper body which can thus be recycled. The urethane resin is hardly dissolved in the composition and can be filtered for disposal thus keeping the composition clean and increasing its operating life.

## Example 5

Pieces of heat-resistant vinyl chloride adhesive tape made by Lintec k.k. were attached to stainless steel plates of 15 cm x 15 cm x 1 mm and exposed at surface to irradiation of infrared ray for 10 minutes before being left to stand for 48 hours. The adhesive agent used here is a mixture of butylacrylate and methylacrylate, by 90% and 10% respectively, having 500,000 of avelage molecular weight.

The stainless steel plates with the tape were immersed in a water for 5 minutes under the processing temprature shown in Tables 25 to 28. Unwoven fabric strips saturated with the compositions of their respective groups A to G listed in Tables 25 to 28 were placed directly on the tape pieces of the stainless steel plates respectively while the (effectively applying) duration being varied as shown in Tables 25 to 28. The temprature of the composition is normal. It was then examined whether or not adherent components of the tape remained on the stainless steel plates after the tape pieces were removed from their respective plates. The results in relation with the temperatures are also shown in Tables 25 to 28.

The symbols ◎ , ○ , Δ , and × represent results of easy removal and no adherent remaining, easy removal but partial adherent remaining, not easy removal and partial adherent remaining, and not easy removal and most adherent remaining respectively.

As apparent from Tables 25 to 28, the compositions of the present invention allow the adherent tape pieces to be easily removed from the stainless steel plates without leaving any adherent substance.

Example 6

Metal sheets having a size of 7 cm x 15 cm x 1 mm were immersed for 10 minutes in a cutting oil which comprises 45 % by weight of #120 machine oil, 45 % by weight of #60 spindle oil, and 10 % by weight of chlorinated paraffin.

After taken out and left to stand for one hour, test pieces of the sheets were provided at surface with a film of the cutting oil. The test pieces were immersed in the compositions of the respective groups A to G listed in Table 29 for 5 minutes and shaped before taking out. Then, the cutting oil films on the test pieces were cleaned out using a rag of unwoven fabric.

Strips of a cellophane tape were attached to the test pieces to examine how the compositions remove the cutting oil. The results are also shown in Table 29.

The symbols ⊚ , △ , and × represent results of excellent attaching, hardly attaching and not attaching respectively.

As apparent from Table 29, the compositions of the present invention allow adherent films of the cutting oil to be readily removed from the metal sheets without leaving any stain.

Example 7 and Comparative Example 2

A 10 micrometer thickness of lacquer (consisting mainly of nitrocellulose and alkyd resin) was applied onto the surface of a glass sheet, 21 cm x 25 cm and dried for 24 hours. Then, the composition and the solvent listed in Tables 30 and 31 respectively were sprayed over the lacquer coating and 20 minutes later, they were cleaned out using a dry rag. The results of removal of lacquer are shown in Tables 30 and 31.

In Tables 30 and 31, the symbols ⊚ , ○ , △ , and × represent facts that the lacquer was turned to a powder form and thus excellently removed, that it was turned to a powder form and fairly removed, that it was partially removed, and that it was dissolved and removed or not removed respectively.

As apparent from Tables 30 and 31, the compositions of the present invention allow lacquer adherents to be readily removed without being dissolved, as compared with the conventional solvents.

Example 8

A rubber roller comprising a steel core coated with a fused nitrile rubber (NBR) was immersed in the composition D-30 for one month. As the result, the NBR was swelled and easily removed from the steel core.

The composition D-30 was found to contain almost no components of the NBR so that it could be recycled. Accordingly, this composition of the present invention allows rubber and metals to be separated from each other for reuse.

Comparative Example 3

A rubber roller comprising a steel core coated with a fused nitrile rubber (NBR) was immersed in a solvent of methyl-ethyl-ketone for one month. As the result, components of the NBR were dissolved in the solvent. It was also found that a container to be filled with the solvent had to be so limited as to prevent evaporation of methyl-ethyl-ketone. Due to the dissolution, the solvent cannot be reused.

Example 9

A rag saturated with the composition D-29 was used to clean down the vinyl chloride coating of electrical cords installed in a copying machine which was soiled with toner. As the result, the toner was successfully removed without giving no damage to the vinyl chloride coating.

Example 10

A rag saturated with the composition D-29 was used to clean down the surface of an acrylic resin plate which was fouled with dirt. As the result, the dirt was successfully removed without giving no damage to the acrylic resin plate.

### Example 11

Pieces of metal wire were blemished at its chrome plated surface with a black marker pen, left to stand for one hour, and immersed for 5 minutes in the compositions listed in Table 32 and filled in 200-ml beakers. Then, it was examined for removal of marker stains and the results are shown in Table 32.

In Table 32, the symbols ⓞ and ○ represent facts that the marker stain was dispersed in powder form as excellently removed and reclaimed by filtering, and that it was dispersed as removed and reclaimed by filtering respectively.

### Comparative Example 4

1,1,1-trichloroethane was used in place of the composition D-29 of Example 11. As the result, the marker stain was dissolved in the solution of 1,1,1-trichloroethane but not claimed by filtering.

### Comparative Example 5

A variety of home cleansers and industrial alkali detergents including Mamaroyal (a product of Lion Chemical) and Family Fresh (a product of Kao) were used in place of the composition D-29 of Example 11. As the result, the marker stain remained intact and not removed.

### Example 12

Sheets of stainless steel and glass were blemished with a black marker pen and after drying of the marker stain, subjected to 0.5 to 1 cc of the compositions D-27 to D-31.

As the result, the marker stain was eliminated within 10 seconds as dispersed in the form of black colored particles in the compositions.

### Example 13 and Comparative Example 6

Test pieces of steel, 68 mm x 150 mm, were coated with a 5 to 8 micrometer thickness of silicon glass (made by Shin-etsu Chemical) and left to stand for over 30 minutes.

0.1 to 0.5 milliliter of each of the compositions listed in Table 33 as an example of the present invention and solvents listed in Table 34 as a Comparative example was applied with a pipette to the test piece and 10 minutes later, cleaned out with a dry rag.

The results are also shown in Tables 33 and 34.

In Tables 33 and 34, the symbols ⓞ , ○ , Δ , and × represent effects of excellent peeling and removal, good peeling and removal, partial peeling and removal, and dissolution and no removal respectively.

### Example 14

When the composition W was fed and agitated in a tank which had been filled with vegetable oil, the remaining oil was successfully removed from the inner wall of the tank.

Since the composition W contains tea tree oil, it provides a germicidal effect for sanitation in the tank.

It would be understood that the compositions of the present invention are not limited to the applications above described. Other applications will be possible including removal of a film of oil on the front window of a vehicle, dirt on the wheels, and oil stains on the kitchen wall.

Also, using one of the compositions of the present invention, graphic patterns printed on a copy sheet can be transferred to another sheet without producing blurs. More specifically, a pattern of toner deposited on the paper sheet is bonded to the same by chemical action of the composition of the present invention but not by fusing with heat that is a common method employed in a conventional copying machine. It is needless to say that the toner can be bonded on pottery, resin seat, glass or clothes.

TABLE 1

| Type of Composition | Processi -ng Time (s) | Processi -ng temp -erature | Effect |
|---|---|---|---|
| B — 2 | 2 0 | 3 0 ℃ | ○ |
| B — 5 | 2 0 | 3 0 ℃ | ○ |
| B — 10 | 3 0 | 3 0 ℃ | ◎ |
| B — 11 | 4 0 | 3 0 ℃ | ○ |
| B — 12 | 2 0 | 3 0 ℃ | ○ |
| B — 15 | 2 0 | 4 0 ℃ | ◎ |
| B — 16 | 2 0 | 4 0 ℃ | ○～◎ |
| B — 18 | 2 0 | 4 0 ℃ | ○ |
| B — 20 | 3 0 | 4 0 ℃ | ○～◎ |
| B — 21 | 2 0 | 3 0 ℃ | ○～◎ |
| C — 1 | 2 0 | 3 0 ℃ | ○ |

TABLE 2

| Type of Composition | Processi -ng Time (s) | Processi -ng temp -erature | Effect |
|---|---|---|---|
| C − 5 | 2 0 | 3 0 ℃ | ○ |
| C − 9 | 2 5 | 3 0 ℃ | ○ |
| C −13 | 3 0 | 3 0 ℃ | ◎ |
| C −16 | 3 0 | 3 0 ℃ | ◎ |
| C −17 | 3 0 | 3 0 ℃ | ◎ |
| C −18 | 3 0 | 4 0 ℃ | ◎ |
| C −19 | 3 0 | 4 0 ℃ | ◎ |
| D − 1 | 3 0 | 4 0 ℃ | ◎ |
| D − 5 | 3 0 | 4 0 ℃ | ◎ |
| D −11 | 6 0 | 3 0 ℃ | ◎ |
| D −12 | 4 0 | 3 0 ℃ | ◎ |

TABLE 3

| Type of Composition | Processing Time (s) | Processing temperature | Effect |
|---|---|---|---|
| D−15 | 4 0 | 3 0℃ | ◎ |
| D−16 | 3 0 | 3 0℃ | ◎ |
| D−20 | 3 0 | 3 0℃ | ◎ |
| D−24 | 4 0 | 3 0℃ | ○〜◎ |
| D−28 | 2 0 | 3 0℃ | ◎ |
| D−29 | 2 0 | 3 0℃ | ○〜◎ |
| D−30 | 2 0 | 3 0℃ | ○ |
| D−31 | 2 0 | 3 0℃ | ○〜◎ |
| D−32 | 4 0 | 4 0℃ | ○ |
| D−33 | 4 0 | 4 0℃ | ○ |
| D−34 | 4 0 | 4 0℃ | ○ |

TABLE 4

| Type of Composition | Processi -ng Time (s) | Processi -ng temp -erature | Effect |
|---|---|---|---|
| D − 35 | 4 0 | 4 0 ℃ | ○ |
| D − 40 | 2 0 | 3 0 ℃ | ◎ |
| D − 41 | 2 0 | 3 0 ℃ | ◎ |
| E − 1 | 5 0 | 3 0 ℃ | ◎ |
| E − 2 | 6 0 | 3 0 ℃ | ◎ |
| E − 3 | 6 0 | 3 0 ℃ | ◎ |
| E − 4 | 7 0 | 3 0 ℃ | ◎ |
| E − 6 | 3 0 | 3 0 ℃ | ◎ |
| E − 7 | 4 0 | 3 0 ℃ | ◎ |
| E − 8 | 6 0 | 3 0 ℃ | ◎ |
| E − 9 | 6 0 | 3 0 ℃ | ◎ |

TABLE 5

| Type of Composition | Processi -ng Time (s) | Processi -ng temp -erature | Effect |
|---|---|---|---|
| E－10 | 5 0 | 3 0℃ | ○ |
| E－11 | 5 0 | 3 0℃ | ○ |
| E－12 | 6 0 | 3 0℃ | ◎ |
| F－1 | 6 0 | 3 0℃ | ◎ |
| F－2 | 6 0 | 3 0℃ | ◎ |
| F－6 | 4 0 | 3 0℃ | ◎ |
| F－7 | 4 0 | 3 0℃ | ◎ |
| F－9 | 3 0 | 3 0℃ | ◎ |
| F－10 | 4 0 | 3 0℃ | ◎ |
| F－12 | 4 0 | 3 0℃ | ○ |
| F－13 | 4 0 | 3 0℃ | ◎ |

TABLE 6

| Type of Composition | Processi -ng Time (s) | Processi -ng temp -erature | Effect |
|---|---|---|---|
| G — 1 | 4 0 | 3 0 ℃ | ◎ |
| G — 2 | 4 0 | 3 0 ℃ | ◎ |
| G — 4 | 4 0 | 3 0 ℃ | ○ |
| G — 5 | 4 0 | 3 0 ℃ | ◎ |
| G — 7 | 4 0 | 3 0 ℃ | ◎ |
| G — 9 | 4 0 | 3 0 ℃ | ◎ |

TABLE 7

| Type of Solvent | Processing Time (s) | Processing temperature | Effect |
|---|---|---|---|
| H-1 | 10 | 30°C | dissolved |
| H-2 | 10 | 30°C | dissolved |
| H-3 | 10 | 30°C | dissolved |
| H-4 | 10 | 30°C | dissolved |
| H-5 | 10 | 30°C | dissolved |
| H-7 | 10 | 30°C | dissolved |
| H-8 | 10 | 30°C | dissolved |
| H-9 | 10 | 30°C | dissolved |
| H-10 | 10 | 30°C | dissolved |
| H-11 | 10 | 30°C | dissolved |
| H-12 | 10 | 30°C | dissolved |

TABLE 8

| Type of Solvent | Processing Time (s) | Processing temperature | Effect |
|---|---|---|---|
| H-13 | 10 | 30°C | dissolved |
| H-14 | 10 | 30°C | dissolved |
| H-15 | 10 | 30°C | dissolved |
| H-16 | 10 | 30°C | dissolved |
| H-17 | 10 | 30°C | dissolved |
| H-18 | 10 | 30°C | dissolved |
| H-20 | 10 | 30°C | dissolved |
| H-21 | 10 | 30°C | dissolved |
| H-22 | 10 | 30°C | dissolved |
| J-1 | 10 | 30°C | dissolved |

TABLE 9

| Type of Composition | Processi -ng Time (s) | Processi -ng temp -erature | Effect | agitation |
|---|---|---|---|---|
| A－1 | 3 0 0 | 3 0 ℃ | ◎ | ○ |
| A－2 | 3 0 0 | 3 0 ℃ | ◎ | ○ |
| A－3 | 2 4 0 | 3 0 ℃ | ◎ | ○ |
| A－4 | 2 4 0 | 3 0 ℃ | ◎ | ○ |
| A－5 | 1 2 0 | 3 0 ℃ | ◎ | ○ |
| A－7 | 1 8 0 | 3 0 ℃ | ◎ | ○ |
| A－9 | 1 8 0 | 3 0 ℃ | ◎ | ○ |
| A－11 | 1 8 0 | 3 0 ℃ | ◎ | ○ |
| A－20 | 1 8 0 | 3 0 ℃ | ◎ | ○ |
| A－14 | 3 0 0 | 3 0 ℃ | ◎ | ○ |
| A－15 | 3 0 0 | 3 0 ℃ | ◎ | ○ |

TABLE 10

| Type of Composition | Processi -ng Time (s) | Processi -ng temp -erature | Effect | agitation |
|---|---|---|---|---|
| A—16 | 3 0 0 | 3 0℃ | ◎ | ○ |
| A—17 | 3 0 0 | 3 0℃ | ◎ | ○ |
| B—1 | 3 0 0 | 4 0℃ | ◎ | × |
| B—2 | 1 8 0 | 3 0℃ | ◎ | ○ |
| B—3 | 1 8 0 | 3 0℃ | ◎ | ○ |
| B—4 | 1 8 0 | 3 0℃ | ◎ | ○ |
| B—5 | 3 0 0 | 3 0℃ | ◎ | ○ |
| B—6 | 1 2 0 | 3 0℃ | ◎ | ○ |
| B—7 | 1 8 0 | 3 0℃ | ◎ | ○ |
| B—8 | 1 8 0 | 3 0℃ | ◎ | ○ |
| B—9 | 1 8 0 | 3 0℃ | ◎ | ○ |

TABLE 11

| Type of Composition | Processing Time (s) | Processing temperature | Effect | agitation |
|---|---|---|---|---|
| B−13 | 2 4 0 | 3 0 ℃ | ○ | ○ |
| B−14 | 2 4 0 | 3 0 ℃ | ○ | ○ |
| B−17 | 1 8 0 | 3 0 ℃ | ◎ | ○ |
| B−19 | 1 8 0 | 3 0 ℃ | ◎ | ○ |
| B−22 | 1 8 0 | 3 0 ℃ | ◎ | ○ |
| B−24 | 2 4 0 | 3 0 ℃ | ◎ | ○ |
| C−1 | 3 0 0 | 3 0 ℃ | ◎ | × |
| C−2 | 1 8 0 | 3 0 ℃ | ◎ | × |
| C−3 | 6 0 | 3 0 ℃ | ◎ | ○ |
| C−4 | 8 0 | 3 0 ℃ | ◎ | ○ |
| C−5 | 2 4 0 | 3 0 ℃ | ◎ | × |

TABLE 12

| Type of Composition | Processi -ng Time (s) | Processi -ng temp -erature | Effect | agitation |
|---|---|---|---|---|
| C − 6 | 1 8 0 | 3 0 ℃ | ◎ | × |
| C − 9 | 2 4 0 | 3 0 ℃ | ◎ | × |
| C − 10 | 1 8 0 | 3 0 ℃ | ◎ | × |
| C − 11 | 1 2 0 | 3 0 ℃ | ◎ | ○ |
| C − 12 | 1 8 0 | 3 0 ℃ | ○ | × |
| C − 14 | 1 2 0 | 3 0 ℃ | ◎ | ○ |
| C − 15 | 2 4 0 | 3 0 ℃ | ◎ | × |
| C − 16 | 4 2 0 | 3 0 ℃ | ○ | × |
| C − 20 | 1 0 0 | 3 0 ℃ | ◎ | × |
| C − 21 | 6 0 | 3 0 ℃ | ◎ | × |
| D − 1 | 1 8 0 | 4 0 ℃ | ◎ | × |

TABLE 13

| Type of Composition | Processi -ng Time (s) | Processi -ng temp -erature | Effect | agitation |
|---|---|---|---|---|
| D — 2 | 1 8 0 | 3 0℃ | ◎ | × |
| D — 3 | 9 0 | 3 0℃ | ◎ | × |
| D — 4 | 1 8 0 | 3 0℃ | ◎ | × |
| D — 5 | 3 0 0 | 3 0℃ | ◎ | × |
| D — 6 | 1 8 0 | 3 0℃ | ◎ | × |
| D — 7 | 9 0 | 3 0℃ | ◎ | × |
| D — 12 | 3 0 0 | 3 0℃ | ◎ | × |
| D — 13 | 6 0 | 3 0℃ | ◎ | × |
| D — 14 | 2 4 0 | 3 0℃ | ◎ | × |
| D — 16 | 3 0 0 | 3 0℃ | ◎ | × |
| D — 17 | 1 8 0 | 3 0℃ | ◎ | × |

TABLE 14

| Type of Composition | Processi -ng Time (s) | Processi -ng temp -erature | Effect | agitation |
|---|---|---|---|---|
| D—19 | 1 8 0 | 3 0 ℃ | ◎ | × |
| D—21 | 1 8 0 | 3 0 ℃ | ◎ | × |
| D—22 | 6 0 | 3 0 ℃ | ◎ | × |
| D—23 | 6 0 | 3 0 ℃ | ◎ | × |
| E—1 | 3 0 0 | 3 0 ℃ | ◎ | × |
| E—6 | 3 0 0 | 3 0 ℃ | ◎ | × |
| F—1 | 6 0 | 3 0 ℃ | ◎ | × |
| F—2 | 6 0 | 3 0 ℃ | ◎ | × |
| F—3 | 1 2 0 | 3 0 ℃ | ◎ | × |
| F—5 | 6 0 | 3 0 ℃ | ◎ | × |
| F—7 | 9 0 | 3 0 ℃ | ◎ | × |
| D—4 2 | 6 0 | 3 0 ℃ | ◎ | × |

TABLE 15

| Type of Composition | Processi -ng Time (s) | Processi -ng temp -erature | Effect | agitation |
|---|---|---|---|---|
| F — 9 | 1 2 0 | 3 0 ℃ | ◎ | × |
| F —10 | 6 0 | 3 0 ℃ | ◎ | × |
| F —12 | 6 0 | 3 0 ℃ | ◎ | × |
| F —13 | 6 0 | 3 0 ℃ | ◎ | × |
| G — 1 | 9 0 | 3 0 ℃ | ◎ | × |
| G — 2 | 9 0 | 3 0 ℃ | ◎ | × |
| G — 4 | 1 2 0 | 3 0 ℃ | ◎ | × |
| G — 5 | 1 5 0 | 3 0 ℃ | ◎ | × |
| G — 7 | 6 0 | 3 0 ℃ | ◎ | × |
| G —10 | 6 0 | 3 0 ℃ | ◎ | × |
| G —11 | 9 0 | 3 0 ℃ | ◎ | × |

TABLE 16

| Type of Composition | Processi -ng Time (min.) | Processi -ng temp -erature | Effect | Ultrasonic | Turning | Agitation |
|---|---|---|---|---|---|---|
| A – 4 | 6 0 | 6 0 ℃ | ◎ | ○ | ○ | ○ |
| A – 5 | 4 0 | 4 5 ℃ | ◎ | ○ | ○ | ○ |
| A – 7 | 6 0 | 6 0 ℃ | ◎ | ○ | ○ | ○ |
| A – 9 | 3 0 | 3 0 ℃ | ◎ | ○ | ○ | ○ |
| A – 11 | 6 0 | 3 0 ℃ | ◎ | ○ | ○ | ○ |
| A – 12 | 4 0 | 4 0 ℃ | ◎ | ○ | ○ | ○ |
| A – 14 | 6 0 | 3 0 ℃ | ◎ | ○ | ○ | ○ |
| A – 15 | 6 0 | 3 0 ℃ | ◎ | ○ | ○ | ○ |
| A – 16 | 3 0 | 3 0 ℃ | ◎ | ○ | ○ | ○ |
| A – 17 | 2 0 | 3 0 ℃ | ◎ | ○ | ○ | ○ |
| B – 1 | 6 0 | 6 0 ℃ | ◎ | ○ | ○ | ○ |

TABLE 17

| Type of Composition | Processi-ng Time (min.) | Processi-ng temp-erature | Effect | Ultrasonic | Turning | Agitation |
|---|---|---|---|---|---|---|
| B－2 | 6 0 | 5 0℃ | ◎ | ○ | ○ | ○ |
| B－5 | 6 0 | 5 0℃ | ◎ | ○ | ○ | ○ |
| B－6 | 6 0 | 5 0℃ | ◎ | × | × | ○ |
| B－9 | 6 0 | 5 0℃ | ◎ | ○ | ○ | ○ |
| B－11 | 4 0 | 3 0℃ | ◎ | ○ | ○ | ○ |
| B－13 | 6 0 | 3 0℃ | ◎ | × | ○ | ○ |
| B－17 | 3 0 | 3 0℃ | ◎ | × | ○ | ○ |
| B－19 | 3 0 | 3 0℃ | ◎ | × | ○ | ○ |
| B－21 | 3 0 | 3 0℃ | ◎ | × | ○ | ○ |
| B－24 | 6 0 | 4 5℃ | ◎ | ○ | ○ | ○ |
| C－1 | 6 0 | 5 0℃ | ◎ | ○ | ○ | ○ |

TABLE 18

| Type of Composition | Processi -ng Time (min.) | Processi -ng temp -erature | Effect | Ultrasonic | Turning | Agitation |
|---|---|---|---|---|---|---|
| C − 2 | 6 0 | 5 0℃ | ○ | ○ | ○ | ○ |
| C − 4 | 3 0 | 5 0℃ | ○ | × | ○ | ○ |
| C − 5 | 6 0 | 5 0℃ | ◎ | ○ | ○ | ○ |
| C − 6 | 6 0 | 4 0℃ | ◎ | ○ | ○ | ○ |
| C − 8 | 6 0 | 5 0℃ | ◎ | ○ | ○ | ○ |
| C − 12 | 6 0 | 5 0℃ | ◎ | ○ | ○ | × |
| C − 13 | 6 0 | 3 0℃ | ◎ | × | ○ | × |
| C − 15 | 6 0 | 3 0℃ | ◎ | ○ | ○ | ○ |
| C − 20 | 4 0 | 3 0℃ | ◎ | × | ○ | ○ |
| D − 2 | 6 0 | 5 0℃ | ◎ | ○ | ○ | ○ |
| D − 4 | 6 0 | 5 0℃ | ◎ | × | ○ | ○ |

TABLE 19

| Type of Composition | Processi -ng Time (min.) | Processi -ng temp -erature | Effect | Ultrasonic | Turning | Agitation |
|---|---|---|---|---|---|---|
| D - 6 | 6 0 | 5 0 ℃ | ◎ | ○ | ○ | ○ |
| D - 9 | 3 0 | 5 0 ℃ | ◎ | × | ○ | ○ |
| D -13 | 6 0 | 5 0 ℃ | ◎ | ○ | ○ | ○ |
| D -17 | 6 0 | 3 0 ℃ | ◎ | ○ | ○ | ○ |
| D -19 | 3 0 | 3 0 ℃ | ○ | × | ○ | ○ |
| D -21 | 3 0 | 3 0 ℃ | ◎ | × | ○ | ○ |
| D -23 | 3 0 | 4 0 ℃ | ◎ | ○ | ○ | × |
| E - 1 | 6 0 | 5 0 ℃ | ○ | ○ | ○ | × |
| E - 6 | 6 0 | 5 0 ℃ | ◎ | ○ | ○ | × |
| F - 1 | 6 0 | 5 0 ℃ | ◎ | ○ | ○ | × |
| F - 2 | 3 0 | 5 0 ℃ | ◎ | × | ○ | × |

TABLE 20

| Type of Composition | Processi -ng Time (min.) | Processi -ng temp -erature | Effect | Ultrasonic | Turning | Agitation |
|---|---|---|---|---|---|---|
| F − 5 | 6 0 | 5 0 ℃ | ◎ | ○ | ○ | × |
| F −10 | 3 0 | 3 0 ℃ | ◎ | × | ○ | × |
| F −11 | 6 0 | 5 0 ℃ | ◎ | ○ | ○ | × |
| F −12 | 4 0 | 3 0 ℃ | ◎ | × | ○ | × |
| F −13 | 6 0 | 5 0 ℃ | ◎ | ○ | ○ | × |
| G − 1 | 6 0 | 5 0 ℃ | ◎ | ○ | ○ | × |
| G − 4 | 3 0 | 3 0 ℃ | ◎ | × | ○ | × |
| G − 5 | 6 0 | 5 0 ℃ | ◎ | ○ | ○ | × |
| G − 7 | 3 0 | 3 0 ℃ | ◎ | × | ○ | × |
| G −10 | 6 0 | 5 0 ℃ | ◎ | ○ | ○ | × |

TABLE 21

| Type of Composition | Processi -ng Time (hours) | Processi -ng temp -erature | Effect | Ultra -sonic | Beads |
|---|---|---|---|---|---|
| A − 3 | 7 | 7 0 ℃ | ○ | × | × |
| A − 3 | 3 | 6 0 ℃ | ○~◎ | × | ○ |
| A − 4 | 2 | 5 0 ℃ | ○~◎ | × | ○ |
| A − 4 | 1.5 | 5 0 ℃ | ○~◎ | ○ | ○ |
| A − 7 | 2.5 | 5 0 ℃ | ◎ | × | ○ |
| A −12 | 3 | 6 0 ℃ | ○~◎ | × | ○ |
| A −14 | 6 | 4 0 ℃ | ○~◎ | × | ○ |
| B − 1 | 3 | 6 0 ℃ | ◎ | × | ○ |
| B − 2 | 2.5 | 5 0 ℃ | ◎ | × | ○ |
| B − 2 | 2 | 5 0 ℃ | ◎ | ○ | ○ |
| B − 7 | 3 | 4 0 ℃ | ◎ | × | ○ |

TABLE 22

| Type of Composition | Processi -ng Time (hours) | Processi -ng temp -erature | Effect | Ultra -sonic | Beads |
|---|---|---|---|---|---|
| B − 9 | 2 | 4 0 ℃ | ◎ | × | ○ |
| B −13 | 2.5 | 5 0 ℃ | ◎ | × | ○ |
| B −24 | 2 | 5 0 ℃ | ◎ | × | ○ |
| C − 2 | 3.5 | 4 0 ℃ | ◎ | × | ○ |
| C − 4 | 2 | 5 0 ℃ | ◎ | × | ○ |
| C − 4 | 1.5 | 5 0 ℃ | ◎ | ○ | ○ |
| C − 8 | 3.5 | 5 0 ℃ | ○〜◎ | × | ○ |
| C −10 | 3 | 5 0 ℃ | ◎ | × | ○ |
| D − 2 | 2.5 | 6 0 ℃ | ◎ | × | ○ |
| D − 3 | 2 | 5 0 ℃ | ◎ | × | ○ |
| D − 4 | 2.5 | 5 0 ℃ | ◎ | × | ○ |

TABLE 23

| Type of Composition | Processi -ng Time (hours) | Processi -ng temp -erature | Effect | Ultra -sonic | Beads |
|---|---|---|---|---|---|
| D − 5 | 3.5 | 6 0 ℃ | ○ | × | ○ |
| D − 8 | 4 | 6 0 ℃ | ○ | × | ○ |
| D −10 | 2.5 | 5 0 ℃ | ◎ | × | ○ |
| D −13 | 2.5 | 5 0 ℃ | ◎ | × | ○ |
| D −14 | 3 | 6 0 ℃ | ◎ | × | ○ |
| D −22 | 2 | 5 0 ℃ | ◎ | × | ○ |
| D −23 | 2 | 5 0 ℃ | ◎ | × | ○ |
| E − 1 | 3 | 7 0 ℃ | ◎ | × | ○ |
| E − 1 | 4 | 5 0 ℃ | ◎ | ○ | ○ |
| F − 2 | 3 | 5 0 ℃ | ◎ | × | ○ |
| F − 6 | 3.5 | 5 0 ℃ | ◎ | × | ○ |

TABLE 24

| Type of Composition | Applying duration (hours) | Processi -ng temp -erature | Effect | Ultra -sonic | Beads |
|---|---|---|---|---|---|
| F — 9 | 2.5 | 5 0 ℃ | ◎ | × | ○ |
| F — 13 | 2.5 | 5 0 ℃ | ◎ | × | ○ |
| G — 3 | 3 | 5 0 ℃ | ◎ | × | ○ |
| G — 11 | 2 | 5 0 ℃ | ◎ | × | ○ |

TABLE 28

| Type of Composition | Applying duration (min.) | Processi -ng temp -erature | Effect |
|---|---|---|---|
| G — 2 | 1 0 | 5 ℃ | ◎ |
| G — 5 | 1 0 | 5 ℃ | ◎ |
| G — 11 | 1 0 | 5 ℃ | ◎ |

TABLE 25

| Type of Composition | Applying duration (min.) | Processi -ng temp -erature | Effect |
|---|---|---|---|
| B – 1 | 1 0 | 3 0 ℃ | ◎ |
| B – 2 | 5 | 3 0 ℃ | ◎ |
| B – 3 | 5 | 1 5 ℃ | ◎ |
| B – 5 | 5 | 2 5 ℃ | ◎ |
| B – 6 | 5 | 5 ℃ | ◎ |
| B – 9 | 5 | 1 0 ℃ | ◎ |
| B –13 | 5 | 1 5 ℃ | ◎ |
| B –17 | 5 | 1 0 ℃ | ◎ |
| B –18 | 5 | 2 5 ℃ | ◎ |
| B –21 | 5 | 2 5 ℃ | ◎ |
| B –24 | 5 | 1 5 ℃ | ◎ |

TABLE 26

| Type of Composition | Applying duration (min.) | Processi -ng temp -erature | Effect |
|---|---|---|---|
| C – 1 | 1 0 | 2 0 ℃ | ◎ |
| C – 2 | 7 | 1 0 ℃ | ◎ |
| C – 8 | 1 0 | 5 ℃ | ◎ |
| C – 11 | 7 | 5 ℃ | ◎ |
| C – 13 | 1 0 | 2 5 ℃ | ◎ |
| C – 15 | 5 | 2 5 ℃ | ◎ |
| D – 2 | 1 0 | 1 5 ℃ | ◎ |
| D – 3 | 1 0 | 5 ℃ | ◎ |
| D – 4 | 5 | 1 5 ℃ | ◎ |
| D – 5 | 8 | 2 5 ℃ | ◎ |
| D – 9 | 5 | 1 5 ℃ | ◎ |

TABLE 27

| Type of Composition | Applying duration (min.) | Processi -ng temp -erature | Effect |
|---|---|---|---|
| D−13 | 1 0 | 1 0℃ | ◎ |
| D−14 | 5 | 1 5℃ | ◎ |
| D−17 | 1 0 | 1 0℃ | ◎ |
| D−22 | 1 0 | 0℃ | ◎ |
| D−23 | 1 0 | 0℃ | ◎ |
| E−1 | 1 5 | 3 0℃ | ◎ |
| F−1 | 1 0 | 5℃ | ◎ |
| F−5 | 1 0 | 5℃ | ◎ |
| F−7 | 1 0 | 0℃ | ◎ |
| F−9 | 1 0 | 5℃ | ◎ |
| F−13 | 1 0 | 0℃ | ◎ |

TABLE 29

| Type of Composition | Processi -ng temp -erature | Effect | Type of Composition | Processi -ng temp -erature | Effect |
|---|---|---|---|---|---|
| B－1 | 2 5℃ | ◎ | D－1 | 2 5℃ | ◎ |
| B－5 | 2 5℃ | ◎ | D－2 | 2 5℃ | ◎ |
| B－11 | 2 5℃ | ◎ | D－5 | 2 5℃ | ◎ |
| B－16 | 2 5℃ | ◎ | D－11 | 2 5℃ | ◎ |
| B－18 | 2 5℃ | ◎ | D－15 | 2 5℃ | ◎ |
| B－21 | 2 5℃ | ◎ | D－18 | 2 5℃ | ◎ |
| C－1 | 2 5℃ | ◎ | E－1 | 2 5℃ | ◎ |
| C－7 | 2 5℃ | ◎ | E－6 | 2 5℃ | ◎ |
| C－9 | 2 5℃ | ◎ | E－7 | 2 5℃ | ◎ |
| C－13 | 2 5℃ | ◎ | F－2 | 2 5℃ | ◎ |
| C－15 | 2 5℃ | ◎ | F－6 | 2 5℃ | ◎ |
| G－2 | 2 5℃ | ◎ | | | |

TABLE 30

| Type of Composition | Effect |
|---|---|
| D－24 | ○ |
| D－25 | ○ |
| D－27 | ◎ |
| D－28 | ○ |
| D－34 | ◎ |
| D－35 | ◎ |
| D－39 | ○ |

TABLE 31

| Type of Solvent | Effect |
|---|---|
| H－1 | × |
| H－14 | × |
| H－21 | × |
| H－22 | × |

TABLE 32

| Type of Composition | Effect |
|---|---|
| D－24 | ◎ |
| D－25 | ○ |
| D－27 | ◎ |
| D－39 | ◎ |
| D－34 | ◎ |
| D－35 | ○ |

TABLE 33

| Type of Composition | Effect |
|---|---|
| D—24 | ◎ |
| D—25 | ○ |
| D—26 | ○ |
| D—27 | ◎ |
| D—28 | ○ |
| D—34 | ◎ |
| D—35 | ◎ |
| D—39 | ◎ |

TABLE 34

| Type of Solvent | Effect |
|---|---|
| H—1 | × |
| H—14 | × |
| H—21 | × |
| H—22 | × |

## Claims

1. A chemical composition for removing organic adherent matters comprising water and an organic compound capable of dissolving or wetting adherents attached to the surface of an adherend, the organic compound dispersed in the water in an oil-in-water type.

2. A chemical composition for removing organic adherent matters of claim 1, wherein the organic compound is at least one diabasic carboxylic diester selected from a group of dimethyl succinate, diethyl succinate, dibutyl succinate, dimethyl adipate, diethyl adipate, dimethyl glutarate, diethyl glutarate, diethyl phthalate, dibutyl phthalate, diethyl tartarate, dioctyl phthalate, and dibutyl lactate.

3. A chemical composition for removing organic adherent matters of claim 1, wherein the organic compound is at least one selected from a group of benzyl alcohol, propylene carbonate, methyl benzyl alcohol, tea tree oil, toluene, and methylethyl ketone.

4. A chemical composition for removing organic adherent matters comprising water, a surface-active agent, and an organic compound capable of dissolving or wetting adherents attached to the surface of an adherend, the organic compound dispersed in the water in an oil-in-water type.

5. A chemical composition for removing organic adherent matters of claim 4, wherein the organic compound is at least one diabasic carboxylic diester selected from a group of dimethyl succinate, diethyl succinate,

70

dibutyl succinate, dimethyl adipate, diethyl adipate, dimethyl glutarate, diethyl glutarate, diethyl phthalate, dibutyl phthalate, diethyl tartarate, dioctyl phthalate, and dibutyl lactate.

6. A chemical composition for removing organic adherent matters of claim 4, wherein the organic compound is at least one selected from a group of benzyl alcohol, propylene carbonate, methyl benzyl alcohol, tea tree oil, toluene, and methylethyl ketone.

7. A chemical composition for removing organic adherent matters of claims 4 to 6, wherein the surface-active agent is at least one selected from a group of sodium sulfate of butyl oleate, polyoxyethylene alkylphenyl ether, polyoxy alkylene monoalkyl ether, and diethanol amido olerate.

8. A chemical composition for removing organic adherent matters comprising water, at least an additive selected from alcohols, glycolether, and pyrrolidone derivatives, and an organic compound capable of dissolving or wetting adherents attached to the surface of an adherend, the organic compound dispersed in the water in an oil-in-water type.

9. A chemical composition for removing organic adherent matters of claim 8, wherein the organic compound is at least one diabasic carboxylic diester selected from a group of dimethyl succinate, diethyl succinate, dibutyl succinate, dimethyl adipate, diethyl adipate, dimethyl glutarate, diethyl glutarate, diethyl phthalate, dibutyl phthalate, diethyl tartarate, dioctyl phthalate, and dibutyl lactate.

10. A chemical composition for removing organic adherent matters of claim 8, wherein the organic compound is at least one selected from a group of benzyl alcohol, propylene carbonate, methyl benzyl alcohol, tea tree oil, toluene, and methylethyl ketone.

11. A chemical composition for removing organic adherent matters of claims 8 to 10, wherein the additive is at least one selected from a group of N-methyl-2-pyrrolydone, 3 methyl-3 methoxybutanol, and isopropyl alcohol.

12. A chemical composition for removing organic adherent matters comprising water, a surface-active agent, at least an additive selected from alcohols, glycol-ether, and pyrrolidone derivatives, and an organic compound capable of dissolving or wetting adherents attached to the surface of an adherend, the organic compound dispersed in the water in an oil-in-water type.

13. A chemical composition for removing organic adherent matters of claim 12, wherein the organic compound is at least one diabasic carboxylic diester selected from a group of dimethyl succinate, diethyl succinate, dibutyl succinate, dimethyl adipate, diethyl adipate, dimethyl glutarate, diethyl glutarate, diethyl phthalate, dibutyl phthalate, diethyl tartarate, dioctyl phthalate, and dibutyl lactate.

14. A chemical composition for removing organic adherent matters of claim 12, wherein the organic compound is at least one selected from a group of benzyl alcohol, propylene carbonate, methyl benzyl alcohol, tea tree oil, toluene, and methylethyl ketone.

15. A chemical composition for removing organic adherent matters of claims 12 to 14, wherein the surface-active agent is at least one selected from a group of sodium sulfate of butyl oleate, polyoxyethylene alkylphenyl ether, polyoxy alkylene monoalkyl ether, and diethanol amido olerate.

16. A chemical composition for removing organic adherent matters of claims 12 to 15, wherein the additive is at least one selected from a group of N-methyl-2-pyrrolydone, 3 methyl-3 methoxybutanol, and isopropyl alcohol.

17. A chemical composition for removing organic adherent matters comprising water, a surface-active agent, 1% or more by weight of an additive which is at least one selected from alcohols, glycol-mono ether, and pyrrolidone derivatives, and less than 15% by weight of dibasic carboxylic diester, the dibasic carboxylic diester dispersed in the water in an oil-in-water type.

18. A chemical composition for removing organic adherent matters of claim 17, wherein the diabasic carboxylic diester is at least one selected from a group of dimethyl succinate, diethyl succinate, dibutyl succinate, dimethyl adipate, diethyl adipate, dimethyl glutarate, diethyl glutarate, diethyl phthalate, dibutyl phthalate, diethyl tartarate, dioctyl phthalate, and dibutyl lactate.

19. A chemical composition for removing organic adherent matters of claims 17 and 18, wherein the surface-active agent is at least one selected from a group of sodium sulfate of butyl oleate, polyoxyethylene alkylphenyl ether, polyoxy alkylene monoalkyl ether, and diethanol amido olerate.

20. A chemical composition for removing organic adherent matters of claims 18 and 19, wherein the additive is at least one selected from a group of N-methyl-2-pyrrolydone, 3 methyl-3 methoxybutanol, and isopropyl alcohol.

21. A chemical composition for removing organic adherent matters, wherein an organic compound capable of dissolving or wetting adherents attached to the surface of an adherend is dissolved in water.

22. A chemical composition for removing organic adherent matters of claim 21, wherein the organic compound is at least one selected from a group of N-methyl-2-pyrrolydone, triethylene glycol dimethyl ether, and diethylene glycol dimethyl ether.

23. A chemical composition for removing organic adherent matters comprising water, a surface-active agent, and an organic compound capable of dissolving or wetting adherents attached to the surface of an adherend, the organic compound dissolved in the water.

24. A chemical composition for removing organic adherent matters of claim 23, wherein the organic compound is at least one selected from a group of N-methyl-2-pyrrolydone, triethylene glycol dimethyl ether, and diethylene glycol dimethyl ether.

25. A chemical composition for removing organic adherent matters of claims 23 and 24, wherein the surface-active agent is at least one selected from a group of sodium sulfate of butyl oleate, polyoxyethylene alkylphenyl ether, polyoxy alkylene monoalkyl ether, and diethanol amido olerate.